# EUROPEAN PATENT SPECIFICATION

(11) **EP 3 553 038 B1**
(45) Date of publication and mention of the grant of the patent: **26.11.2025**
(21) Application number: 17881484.4
(22) Date of filing: 08.12.2017
(51) Int. Cl.: C03C 17/28, B60J 1/00, B60R 11/02

(54) **WINDSHIELD, GLASS PRODUCT FOR WINDSHIELD, AND ANTIFOGGING MEMBER**
WINDSCHUTZSCHEIBE, GLASPRODUKT FÜR WINDSCHUTZSCHEIBE UND ANTIBESCHLAGELEMENT
PARE-BRISE, PRODUIT DE VERRE POUR PARE-BRISE ET ÉLÉMENT ANTIBUÉE

(30) Priority: 12.12.2016 JP 2016240340
(43) Date of publication of application: 16.10.2019
(73) Proprietor: Nippon Sheet Glass Company, Limited, Tokyo 108-6321 (JP)
(72) Inventor: KONDO, Fumiyoshi, Tokyo 108-6321 (JP); OYA, Kazuaki, Tokyo 108-6321 (JP); KAMITANI, Kazutaka, Tokyo 108-6321 (JP); SHIMOKAWA, Yohei, Tokyo 108-6321 (JP); KAWAZU, Mitsuhiro, Tokyo 108-6321 (JP); TERANISHI, Toyoyuki, Tokyo 108-6321 (JP)
(74) Representative: Cabinet Beau de Loménie
(86) International application number: PCT/JP2017/044244
(87) International publication number: WO 2018/110465

(56) References cited:
- WO-A1-2015/186360
- WO-A1-2016/129699
- JP-A- 2001 146 585
- JP-A- 2001 146 585
- JP-A- 2012 017 394
- JP-A- 2016 088 493
- JP-A- S62 148 535

## Description

### TECHNICAL FIELD

The present invention relates to a windshield suitable for use with an information acquisition device that receives light entering the interior of a vehicle to acquire information about the surroundings of the vehicle and to a glass product suitable for the windshield. The present invention also relates to an anti-fogging member including a water-absorbing film.

### BACKGROUND ART

Vehicle collision avoidance systems are becoming widespread, which sense the distance to a forward vehicle or any other information and automatically activate the brakes upon detection of impending collision. Such a system uses an information acquisition device such as a camera or an infrared laser-based radar to acquire information such as the distance to a forward vehicle and the presence of a pedestrian. Information acquisition devices that acquire information about the surroundings of a vehicle by receiving light are also used, such as a rain sensor, a light sensor, and an optical beacon. In a self-driving system, an information acquisition device serves to acquire a larger amount of information from the surroundings of the vehicle. In general, an information acquisition device such as a camera is disposed in a vehicle in proximity to the interior-facing surface of the glass sheet forming the windshield of the vehicle and acquires information by receiving light entering from the surroundings of the vehicle through the glass sheet, and some types of information acquisition devices perform this information acquisition while emitting light forward.

A variety of windshields suitable for installation of information acquisition devices have been proposed. For example, Patent Literature 1 discloses a laminated glass as a glass sheet forming a windshield, the laminated glass having a light-transmissive region provided in a colored shade band region. Patent Literature 2 discloses an embodiment in which a non-transparent film (mask layer) formed on a glass sheet to block the view from the surroundings of the vehicle is provided with an opening and in which an information acquisition device acquires information about the surroundings of the vehicle from light passing through the opening.

The accuracy of information acquired by an information acquisition device may be decreased due to deteriorated straightness of light caused by fogging of a glass sheet forming a windshield. A vehicle interior space including a light path taken by light entering the information acquisition device through the glass sheet (this space will be referred to as "light path space" hereinafter) is separated from another vehicle interior space provided for occupants including the driver (this space will be referred to as "occupant space" hereinafter") by a member for fixing of the information acquisition device or for light shielding. The fogging of the glass sheet, which decreases the accuracy of information, occurs when water vapor in the light path space is condensed on the interior-facing surface of the glass sheet.

Patent Literature 3 discloses placing a drying agent in the light path space. Patent Literature 3 mentions silica gel and activated carbon as examples of the drying agent. In Patent Literature 3, a hydrophilic coating such as one made of hydrophilic silane is formed on the surface of a windshield that is in contact with the light path space.

### CITATION LIST

### Patent Literature

Patent Literature 1: JP 2006-96331 A
Patent Literature 2: JP 2016-88493 A
Patent Literature 3: JP 2013-500900 A

WO 2015/186360 A1 shows a transparent article with an anti-fog single-layer film that includes a metal oxide component and a water-absorbent resin, and C1-30 linear or cyclic alkyl groups in which at least one hydrogen atom is optionally substituted by a fluorine atom.

A windshield according to WO 2016/129699 A1, on which an information acquisition device for acquiring information from outside a vehicle by radiating and/or receiving light can be arranged, is provided with a glass panel, and an anti-fog means provided to the glass panel, the glass panel having at least one information acquisition region facing the information acquisition device, light passing through the information acquisition region, and the anti-fog means being provided so as to prevent fogging of the information acquisition region of the glass panel.

JP 2001-146585 A shows an antifogging film which comprises (A) a composite water-absorbent film formed from a mixture comprising a polyvinyl acetal resin having a degree of acetalization of 10 mol% or lower and a hydrolyzate or partial hydrolyzate of an alkylsilyl isocyanate and (B) a water-permeable protective film formed thereon with a thickness of 3 to 10 nm.

### SUMMARY OF INVENTION

### Technical Problem

The drying agent disclosed in Patent Literature 3, such as silica gel, needs to be placed in a container because of being in the form of grains, and is not suitable for being fixed in a narrow light path space. Such a drying agent is a common water-absorbing material and, as is evident from its name, this agent is used mainly for the purpose of drying, i.e., for the purpose of controlling the relative humidity within a low-to-moderate humidity region. However, the above-described fogging of a glass sheet is thought to occur when the light path space has a higher humidity. There is room for investigation of whether a common drying agent such as silica gel is suitable for prevention of condensation of water vapor in the light path space.

In view of such circumstances, it is an object of the present invention to provide a windshield bearing a water-absorbing material suitable for prevention of condensation of water vapor in a light path space. An object of a preferred embodiment of the present invention is to provide a windshield suitable for preventing fogging of a glass sheet facing a light path space and maintaining high accuracy of information acquired by an information acquisition device. Another object of the present invention is to provide a glass product suitable for forming the windshield according to the present invention. Still another object of the present invention is to provide an anti-fogging member suitable for preventing condensation of water vapor in a narrow space with a high degree of closure.

### Solution to Problem

The present invention is defined in the claims.

### Advantageous Effects of Invention

The present invention provides a windshield bearing a water-absorbing material suitable for prevention of condensation of water vapor in a light path space. The windshield according to the present invention and the glass product for a windshield according to the present invention are suitable for prevention of decrease in accuracy of information acquired by an information acquisition device. The anti-fogging member according to the present invention is suitable for prevention of condensation of water vapor in a narrow space with a high degree of closure.

A water-absorbing material that exhibits superior water absorption characteristics in a high humidity region is suitable for prevention of condensation of water vapor in a narrow light path space with a high degree of closure, even if the saturated water absorption of the material is not especially high. In other words, it is desirable that the water absorption should vary more sensitively with change of relative humidity in a high humidity region than with change of relative humidity in a low-to-moderate humidity region. With the use of a water-absorbing material that has a high saturated water absorption Ws as specified above despite being in the form of a film and that satisfies the condition A1 and/or B1, condensation of water vapor in a light path space can be effectively prevented. The reason why the upper limit of the relative humidity in the conditions A1 and B1 is 90% or 95% rather than 100% is that these conditions are set with a focus on water absorption characteristics in a humidity range from low-to-moderate humidity region to high humidity region where fogging does not occur but the relative humidity is high.

### BRIEF DESCRIPTION OF DRAWINGS

FIG. 1 is a partial cross-sectional view showing an embodiment of the windshield according to the present invention.
FIG. 2 is a plan view of the windshield shown in FIG. 1.
FIG. 3 is a partial cross-sectional view showing another embodiment of the windshield according to the present invention.
FIG. 4 is a partial cross-sectional view showing a still another embodiment of the windshield according to the present invention.
FIG. 5 is a partial cross-sectional view showing a still another embodiment of the windshield according to the present invention.
FIG. 6 is a cross-sectional view showing a situation where an embodiment of the anti-fogging member according to the present invention is disposed.
FIG. 7 is a cross-sectional view showing another embodiment of the anti-fogging member according to the present invention.
FIG. 8 is a cross-sectional view showing still another embodiment of the anti-fogging member according to the present invention.
FIG. 9 is a cross-sectional view showing a water-absorbing film formed on a surface of a glass sheet or a cover.
FIG. 10 shows examples of the water vapor adsorption/desorption isotherms of water-absorbing films.
FIG. 11 shows water droplets present on a surface of a water-absorbing film with high water contact angle.
FIG. 12 shows water droplets present on a surface of a water-absorbing film with low water contact angle.

### DESCRIPTION OF EMBODIMENTS

Some terms used in the present specification will be described first. The terms "light path space" and "occupant space" are as previously described. The term "saturated water absorption" refers to the amount of water vapor adsorbed on a water-absorbing film that is in an adsorption equilibrium state at a relative humidity of 100%. The saturated water absorption refers to the amount of water vapor that a water-absorbing film adsorbs as the film changes from a "completely dry state" where the film is in an adsorption equilibrium state at a relative humidity of 0% to a "saturated water absorption state" where the film is in an adsorption equilibrium state at a relative humidity of 100%. On an adsorption isotherm, the "water absorption" of a water-absorbing film at a given relative humidity is the amount of water vapor that the water-absorbing film adsorbs as the film changes from the completely dry state to the adsorption equilibrium state at the given relative humidity. On a desorption isotherm, the "water absorption" of a water-absorbing film at a given relative humidity is the amount of water vapor adsorbed on the water-absorbing film when the film has reached the adsorption equilibrium at the given relative humidity from the saturated water absorption state. In the present specification, the water absorption of a water-absorbing film is expressed by a value per unit area of the water-absorbing film.

The saturated water absorption is the water absorption at a relative humidity of 100% on an adsorption/desorption isotherm. It should be noted that the saturated water absorption may be determined by extrapolation from a water absorption in a high humidity region, such as a water absorption at a relative humidity of 85 to 95%. Whether the "saturated water absorption" is equal to or higher than a given lower limit (e.g., 1 g/m²) can be confirmed by determining whether the water absorption at a relative humidity close to 100% such as a relative humidity of 95% is equal to or higher than the lower limit.

Measurement of adsorption/desorption isotherms and measurement of various water absorption characteristics, such as water absorption at a given relative humidity, of a water-absorbing film are all performed at a temperature of 10°C.

The abscissa of an adsorption isotherm generally represents a relative pressure (P/P₀) corresponding to an equilibrium pressure (P) divided by a saturated vapor pressure (P₀). However, in the present specification, the degree of saturation with water vapor is indicated by a percentage value of P/P₀, namely by a "relative humidity", in order to enable intuitive understanding of the relative pressure.

The above parameters such as "water absorption" are measured by constant-volume methods which are the most common. The measurement of a water vapor adsorption isotherm by a constant-volume method can be carried out using a commercially-available apparatus such as "BELSORP-18PLUS HT" of MicrotracBEL Corp. The same applies to the measurement of a water vapor desorption isotherm.

In the present specification, the term "water-repellent group" refers to a hydrocarbon group which has 1 to 30 carbon atoms and in which at least one hydrogen atom may be substituted by a fluorine atom, and this hydrocarbon group is typically a linear or cyclic alkyl group. The term "metal oxide component" is intended to include both a component consisting of metal and oxygen atoms bonded to each other and a moiety having a metal atom bonded directly to an oxygen atom. Thus, for example, in a component represented by the formula R-M-O (R: water-repellent group, M: metal atom), the moiety represented by MO constitutes a metal oxide component. The word "metal" used in the terms such as "metal oxide component", "metal atom", and "metal compound" is intended to include boron (B) and silicon (Si), as is conventional.

Next, preferred embodiments of the present invention will be described.

In a preferred embodiment of the present invention, the water-absorbing film satisfies at least the condition A1. In this case, it is more preferable for the water-absorbing film to satisfy the condition A2 that in the orthogonal coordinate system as defined above, a water vapor desorption isotherm of the water-absorbing film is a downwardly convex curve in an interval where the relative humidity is 20 to 90%. The water-absorbing film satisfying the condition A2 exhibits better water desorption characteristics in a high humidity region than in a low-to-moderate humidity region. That is, the water-absorbing film satisfying the condition A2 shows good recovery of water-absorbing capacity in a high humidity region.

In a preferred embodiment of the present invention, the water-absorbing film further satisfies the condition D that the ratio of the difference calculated by subtracting a water absorption A₇₀ at a relative humidity of 70% on the water vapor adsorption isotherm from the saturated water absorption Ws to the saturated water absorption Ws ((Ws-A₇₀)/W_{S}) × 100) is 75% or more, preferably 78% or more, and particularly preferably 80% or more. The water-absorbing film satisfying the condition D can more effectively prevent condensation of water vapor in a region where the relative humidity is particularly high and fogging is about to occur.

In a preferred embodiment of the present invention, the water-absorbing film satisfies at least the condition B1. In this embodiment, it is more preferable for the water-absorbing film to further satisfy the condition B2 that when a decrease in water absorption of the water-absorbing film with decreasing relative humidity from 95% to 70% on a water vapor desorption isotherm of the water-absorbing film is defined as DeH, the decrease in water absorption DeH is more than 30% of the saturated water absorption Ws. The water-absorbing film satisfying the condition B2 exhibits better water desorption characteristics in a high humidity region than in a low-to-moderate humidity region. That is, the water-absorbing film satisfying the condition B2 shows good recovery of water-absorbing capacity in a high humidity region.

It is preferable for the water-absorbing film to further satisfy the condition C that in the orthogonal coordinate system as defined above, a water absorption DA₈₅ of the water-absorbing film on a desorption isotherm is located at a relative humidity of 75% or more, the water absorption DA₈₅ corresponding to a water absorption A₈₅ of the water-absorbing film at a relative humidity of 85% on the adsorption isotherm. As the relative humidity begins to decrease from 85%, this preferred water-absorbing film begins to desorb water vapor when the relative humidity is still as high as 75% or more. The quick recovery of water-absorbing capacity associated with decrease in relative humidity is preferred for re-adsorption of water vapor by the water-absorbing film.

Between the water-absorbing film and the surface of the glass sheet or the above-defined member that is in contact with the light path space where the water-absorbing film is disposed, there may be provided a substrate having a first surface supporting the water-absorbing film and an adhesive layer in contact with a second surface of the substrate, the second surface being opposite to the first surface. This embodiment allows the water-absorbing film to be easily disposed on a portion requiring the film. This embodiment is also suitable for prevention of the temperature decrease of the water-absorbing film because the substrate and the adhesive layer have heat insulating effect.

In a preferred embodiment of the present invention, the water-absorbing film is disposed at least on a surface of the fixing and/or light-shielding member, the surface being in contact with the light path space. In another preferred embodiment of the present invention, the water-absorbing film is disposed at least on a surface of the glass sheet, the surface being in contact with the light path space. In still another preferred embodiment of the present invention, the windshield includes a first water-absorbing film disposed on the surface of the fixing and/or light-shielding member that is in contact with the light path space and a second water-absorbing film disposed on the surface of the glass sheet that is in contact with the light path space. The water-absorbing film disposed on the surface of the glass sheet that is in contact with the light path space may be formed directly on the surface of the glass sheet.

It is preferable for the surface of the water-absorbing film to be hydrophobic. Specifically, it is advantageous that a water contact angle as measured by applying a 4-mg water droplet to the surface of the water-absorbing film be 70 degrees or more. A film having such a high contact angle is not hydrophilic. According to Patent Literature 3, the preferred contact angle of a hydrophilic coating to be formed on the interior-facing surface of a glass sheet is less than 25 degrees.

Hereinafter, specific embodiments of the present invention will be described with reference to the drawings. The following description is not intended to limit the present invention to particular embodiments.

### [Windshield]

### (First embodiment)

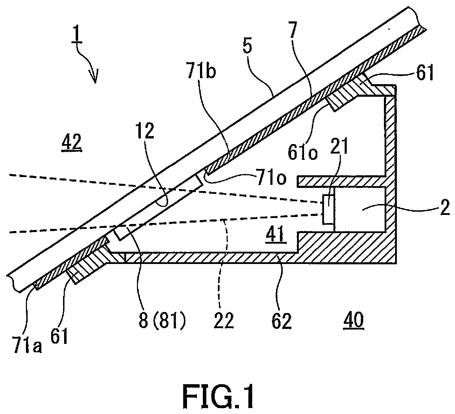

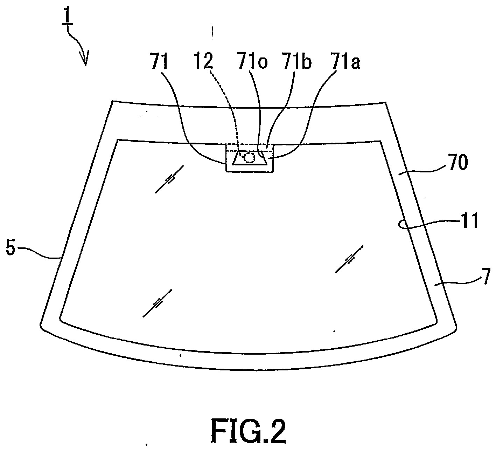

As shown in FIGS. 1 and 2, a windshield 1 according to the present embodiment includes a glass sheet 5 separating the interior of a vehicle from the surroundings of the vehicle in a front portion of the vehicle body. The glass sheet 5 is mounted in the vehicle body in an inclined position such that the surface of the glass sheet facing the surroundings is oriented obliquely upward. In general, a laminated glass composed of a plurality of single-layer glass sheets jointed to each other by a resin interlayer is used as the glass sheet 5 serving as a member of the windshield 1. The laminated glass typically includes two single-layer glass sheets and one resin interlayer joining the glass sheets to each other.

The glass sheet 5 has a shielding film 7 formed on a region of the glass sheet 5 to make the region opaque. The shielding film 7 is formed at least on a peripheral region 70 of the glass sheet 5. The peripheral region 70 is provided in the shape of a frame along the periphery of the glass sheet 5. The shielding film 7 makes the peripheral region 70 opaque to prevent the junction between the glass sheet 5 and the vehicle body in the region 70 from being seen from the surroundings of the vehicle. The peripheral region 70 surrounds a transparent region 11 extending over the central portion of the glass sheet 5. The transparent region 11 is a region for allowing occupants including the driver to view the surroundings of the vehicle, in particular the surroundings in front of the vehicle, from the interior of the vehicle. In a portion of the transparent region 11, such as typically a strip-shaped portion along the upper peripheral edge, there may be provided a light-transmissive colored portion (not illustrated) for reducing glare which could be felt by occupants due to direct sunlight. The colored portion is called, for example, a shade band, and is typically formed by coloring part of the interlayer of the laminated glass.

The shielding film 7 is formed not only on the peripheral region 70 but also on a protruding region 71. The protruding region 71 is a region protruding from the upper portion of the peripheral region 70 toward the center of the glass sheet 5. In the illustrated example, the protruding region 71 is constituted by a frame portion 71a which is approximately U-shaped and a connection portion 71b connecting the frame portion 71a to the peripheral region 70. The frame portion 71a has both ends connected to the connection portion 71b in such a manner that an opening 71o is formed between the frame portion 71a and the connection portion 71b. The opening 71o of the protruding region 71 is located in the vicinity of the upper peripheral edge of the glass sheet 5 and is separated from the transparent region 11 by the frame portion 71a. The interior-facing surface of the glass sheet 5 has, in the opening 71o, a region 12 through which light coming from an outer space 42 passes to enter an information acquisition device 2 along a light path 22 (this region will be referred to as "information acquisition region" hereinafter).

In the illustrated embodiment, the shielding film 7 is formed on the interior-facing surface of the glass sheet 5 or, to be exact, on the surface exposed to the interior of the vehicle. This surface in a laminated glass including two glass sheets corresponds to the interior-facing surface of the inner glass sheet, which is called a fourth surface. However, this configuration is not limiting, and the shielding film 7 may be formed on another surface of the laminated glass, such as the interior-facing surface of the outer glass sheet which is called a second surface.

On the interior-facing surface of the glass sheet 5, an anti-fogging member 8 is disposed so as to cover the information acquisition region 12. In the present embodiment, the anti-fogging member 8 is disposed not in contact with the shielding film 7. Disposing the anti-fogging member 8 without overlap with the shielding film 7 is suitable for an embodiment in which the anti-fogging member 8 is adhered to the glass sheet 5. This is because if the anti-fogging member 8 is adhered in such a manner as to extend from the inside of the opening 71o and overlap the shielding film 7, air bubbles are likely to enter the gap between the anti-fogging member 8 and the glass sheet 5, thus causing partial peeling of the anti-fogging member 8. The anti-fogging member 8 may be spaced from the periphery of the opening 71o of the shielding film 7 or may be disposed in contact with at least part of the periphery of the opening 71o. The latter configuration allows easy positioning of the anti-fogging member 8. In order to impart anti-fogging property to the entire region within the opening 71o of the shielding film, the anti-fogging member 8 may be disposed so as to cover the entire opening 71o and part of the surface of the shielding film 7. In any case, it is desirable that the anti-fogging member 8 be disposed so as to cover at least the information acquisition region 12.

The anti-fogging member 8 includes a water-absorbing film and is disposed in such a manner that water-absorbing film is exposed to a light path space 41. A water-absorbing film 81 may be disposed alone in place of the anti-fogging member 8. In this case, the water-absorbing film 81 may be formed directly on a surface of, for example, the glass sheet 5. The details of the water-absorbing film will be described later. In the present embodiment, the anti-fogging member 8 is not disposed in the transparent region 11. In the present embodiment, anti-fogging of the glass sheet 5 in the transparent region 11 is achieved by a defogger which is not illustrated. The anti-fogging member 8 or water-absorbing film 81 may, if necessary, be formed on that portion of the interior-facing surface of the glass sheet 5 which is in contact with the occupant space. Anti-fogging of this portion of the interior-facing surface may be accomplished by the defogger. That is, the anti-fogging member 8 or water-absorbing film 81 does not necessarily need to be formed on that portion of the interior-facing surface of the glass sheet 5 which is in contact with the occupant space.

The information acquisition device 2 includes a light receiver 21 and is disposed in such a manner as to allow the light receiver 21 to receive light passing through the laminated glass 5. The information acquisition device 2 is fixed at a predetermined location inside a cover 62. The information acquisition device 2 is, for example, an imaging device such as a video camera which captures images of the surroundings of the vehicle or a laser radar which emits laser light and receives the laser light reflected by an object in the surroundings of the vehicle. The information acquisition device 2 may be a rain sensor, a light sensor, or an in-vehicle device of an optical beacon. The information acquisition device 2 is connected, via a non-illustrated wire, to an information processing device provided at a non-illustrated location to process acquired information.

The windshield 1 includes at least one member (fixing and/or light-shielding member) serving the function of fixing of the information acquisition device 2 and/or light shielding between the light path space 41 and the occupant space 40. FIG. 1 illustrates a bracket 61 and cover 62 as the fixing and/or light-shielding member. The bracket 61 and cover 62 act as a fixing member that fixes the information acquisition device 2 to the glass sheet 5 of the windshield 1 at a location where the information acquisition device 2 can receive light coming along the light path 22. The bracket 61 and cover 62 also act as a light-shielding member that ensures light shielding between the light path space 41 and the vehicle interior space 40 to prevent light from coming from the vehicle interior space 40 to get on the light path 22 and reach the information acquisition device 2.

The bracket 61 is fixed to the glass sheet 5 by a bonding member which is not illustrated. A preferred bonding member is a double-sided adhesive tape. The bracket 61 may be fixed to the glass sheet 5 using an adhesive in addition to, or instead of, the bonding member. The cover 62 is fixed to the bracket 61. The attachment of the cover 62 to the bracket 61 may be carried out by fitting between fitting portions preformed respectively in the two members 61 and 62 or may be carried out by using bolts and nuts or any other fixing members. The bracket 61 may, if necessary, be fitted with a harness.

The shielding film 7 is formed on that surface of the glass sheet 5 to which the bracket 61 is fixed. The bracket 61 is, for example, a frame-shaped member having an opening 61o larger than the opening 71o of the shielding film 7. The frame portion 71a and connection portion 71b of the shielding film 7 also serve to prevent the bonding member for fixing of the bracket 61 from being seen from the surroundings of the vehicle.

The light path space 41 is separated from the occupant space 40 by the bracket 61 and cover 62 to prevent direct entry of light from the occupant space 40. In order to prevent entry of unnecessary light from the outer space 42, the shielding film 7 is formed also on the surface of the glass sheet 5 that faces the light path space 41, except for the opening 71o. The light path space 41, except for the opening 71o of the shielding film 7, is substantially shielded from external light by the members 61 and 62 and the film 7.

The light path space 41 is a space having a limited volume defined by the fixing and/or light shielding members 61 and 62 and the glass sheet 5. The light path space 41 is typically configured to allow passage of air between the light path space 41 and the vehicle interior space 40, rather than being configured to be completely airtight. However, the degree of closure of the light path space 41 is high to ensure light shielding. Thus, once air enters the light path space 41, the air is likely to reside in the light path space 41. Upon entry of wet air into the light path space 41 from the vehicle interior space 40, the relative humidity of the light path space 41, which is narrow, sharply increases even when the amount of water vapor having entered the space 41 is not large. Air heated and/or dehumidified by the action of an air conditioner is less likely to reach the light path space 41. Due to the combination of these factors, the glass sheet 5 facing the light path space 41 is prone to fogging.

In view of the high degree of closure of the light path space 41, there is a low possibility that a large amount of water vapor flows into the light path space 41 having a low relative humidity in a short time to cause fogging of the glass sheet 5 facing the light path space 41. The fogging of the glass sheet 5 facing the light path space 41 is thought to occur mainly when the relative humidity of the light path space 41 is, for example, as high as 70% or more. It is therefore desirable that the fogging prevention in the light path space 41 be attempted with a water-absorbing film having superior water vapor absorption characteristics in a high humidity region. Specifically, a water-absorbing film satisfying the condition A1 and/or condition B1 described above is suitable for the fogging prevention in the light path space 41.

Since it is sufficient to absorb water vapor present in the light path space 41 which has a limited volume, the saturated water absorption of the water-absorbing film need not be extremely high. However, according to the investigation by the present inventors, it is desired that the saturated water absorption per unit area of the water-absorbing film be 1 g/m² or more. The saturated water absorption per unit area of the water-absorbing film is preferably 2 g/m² or more, more preferably 3 g/m² or more, even more preferably 4 g/m² or more, still even more preferably 5 g/m² or more, and particularly preferably 6 g/m² or more.

Addition of an excess amount of water absorber to the water-absorbing film may impair the light transmissivity of the film and acts as a factor of increase in production cost. The saturated water absorption per unit area of the water-absorbing film may be 100 g/m² or less and is preferably 50 g/m² or less, more preferably 30 g/m² or less, and particularly preferably 10 g/m² or less.

The condition A1 is that in an orthogonal coordinate system which has an abscissa representing relative humidity and an ordinate representing amount of adsorbed water vapor and in which the value of the saturated water absorption is located above an origin on the ordinate, a water vapor adsorption isotherm of the water-absorbing film is a downwardly convex curve in an interval where the relative humidity is 20 to 90%. For the water-absorbing film satisfying the condition A1, the amount of water vapor absorbed upon change of relative humidity increases with increasing relative humidity from 20%. As the relative humidity becomes close to 90%, the amount of water vapor absorbed upon change of relative humidity sharply increases. The water-absorbing film satisfying the condition A1 is a film having superior water absorption characteristics in a high humidity region. It is more preferable for the water-absorbing film to satisfy the condition that the water vapor adsorption isotherm is a downwardly convex curve in an interval where the relative humidity is 20 to 95%.

The condition B1 is that when an increase in water absorption of the water-absorbing film with increasing relative humidity from 70% to 95% on the water vapor adsorption isotherm of the water-absorbing film is defined as AbH, the increase in water absorption AbH is more than 35% of the saturated water absorption Ws. The water-absorbing film satisfying the condition B1 has a higher water absorption in a high humidity region than in a low-to-moderate humidity region and exhibits superior water absorption characteristics in a high humidity region. It is more preferable for the water-absorbing film to satisfy the condition that AbH corresponds to 40% or more of Ws. It is also preferable for the water-absorbing film to satisfy the condition that an increase in water absorption of the water-absorbing film with increasing relative humidity from 85% to 95% is more than 20% of the saturated water absorption Ws.

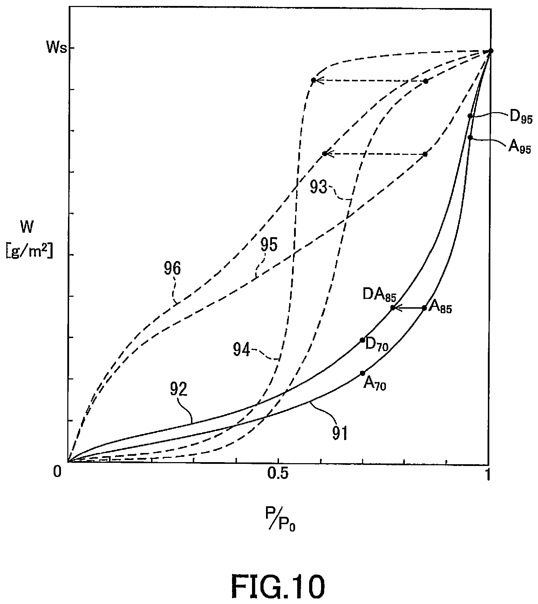

FIG. 10 is a graph representing adsorption/desorption isotherms on the above-defined orthogonal coordinate system having an abscissa representing the relative pressure P/P₀ and an ordinate representing the amount of adsorbed water vapor W. The abscissa value as expressed in % corresponds to "relative humidity". The amount of adsorbed water vapor (water absorption) W is indicated by the amount of water vapor per unit area of the water-absorbing film (g/m²).

In FIG. 10, a preferred example of the water vapor adsorption isotherm of a water-absorbing film satisfying the conditions A1 and B1 is indicated by a solid line 91. A solid line 92 is a preferred example of the water vapor desorption isotherm of the water-absorbing film satisfying the conditions A2 and B2.

Dashed lines 93 and 94 are typical examples of the adsorption isotherm and desorption isotherm of a type of water absorber that exhibits water-absorbing performance based on pores. A representative example of this type of water absorber is activated carbon. The so-called hysteresis of the adsorption isotherm and desorption isotherm of a water absorber having pores is large, and the isotherms greatly differ from each other.

Examples of the adsorption isotherm and desorption isotherm of a water absorber having higher affinity for water vapor than the water absorber exhibiting the isotherms indicated by the dashed lines 93 and 94 are indicated by dashed lines 95 and 96, respectively. A representative example of this type of water absorber is alumina. In the adsorption/desorption isotherms indicated by the dashed lines 95 and 96, the water absorption in a low humidity region is relatively high due to the somewhat high affinity of the water absorber for water vapor. The adsorption/desorption isotherms of a hydrophilic material having higher affinity for water vapor than alumina will be located leftward of the dashed lines 95 and 96 as a result of the hydrophilic material exhibiting a higher water absorption in the low humidity region. Hydrophilic coatings such as those made of hydrophilic silane can never satisfy the conditions described above.

The water vapor adsorption isotherm 91 of the water-absorbing film according to the present embodiment is a downwardly convex curve at least in an interval where the relative humidity is 20% to 90%, and thus the condition A1 is satisfied. For the adsorption isotherm 91, the increase in water absorption with increasing relative humidity from 70% to 95% (increase within high humidity region: AbH = A₉₅ - A₇₀) corresponds to at least 50% of the saturated water absorption Ws, and thus the condition B1 is satisfied.

By contrast, for the adsorption isotherms 93 and 95, neither the condition A1 nor the condition B1 is satisfied. The adsorption isotherm 93 presents an upwardly convex curve in a high humidity region above about 70%. The adsorption isotherm 95 presents an upwardly convex curve in a low humidity region below about 30%. For the adsorption isotherms 93 and 95, the increase in water absorption within high humidity region, AbH (A₉₅-A₇₀), is 35% or less of the saturated water absorption Ws.

The desorption isotherm 92 is a downwardly convex curve at least in an interval where the relative humidity is 20% to 90%, and thus the condition A2 is satisfied. For the desorption isotherm 92, the decrease in water absorption with decreasing relative humidity from 95% to 70% (decrease within high humidity region: DeH = D₉₅ - D₇₀) is more than 30% of the saturated water absorption Ws, and thus the condition B2 is satisfied.

As understood from FIG. 10, the water-absorbing film having water vapor adsorption/desorption characteristics represented by the adsorption/desorption isotherms 91 and 92 further satisfies the condition C. After this water-absorbing film has absorbed water until the relative humidity has reached 85%, the water-absorbing film, with decreasing relative humidity, begins to release water as early as when the relative humidity falls into the range of 75 to 80% where DA₈₅ is located.

FIG. 10 also gives the understanding that the water-absorbing films having water vapor adsorption/desorption characteristics represented by the adsorption/desorption isotherms 93, 94, 95, and 96 do not satisfy any of the conditions A2, B2, and C. As for the condition C, the water-absorbing films having absorbed water until the relative humidity has reached 85% do not begin to release water unless the relative humidity falls below 60%, as is evident from the heads of the dashed arrows extending between the curves 93 and 94 and between the curves 95 and 96.

It is desirable that a water absorber used as a dessicant or humidity controlling agent, once having absorbed water, should not release water in a high humidity region. For such uses, a water absorber exhibiting the adsorption/desorption isotherms 93 and 94 or 95 and 96 with a large hysteresis is suitable. However, such a water absorber is not suitable for the purpose of preventing fogging in the light path space 41.

When the anti-fogging member 8 is disposed so as to cover the information transmission region 12, the light transmittance of the anti-fogging member 8, as expressed by visible transmittance, is preferably 85% or more and particularly preferably 90% or more.

### (Second embodiment)

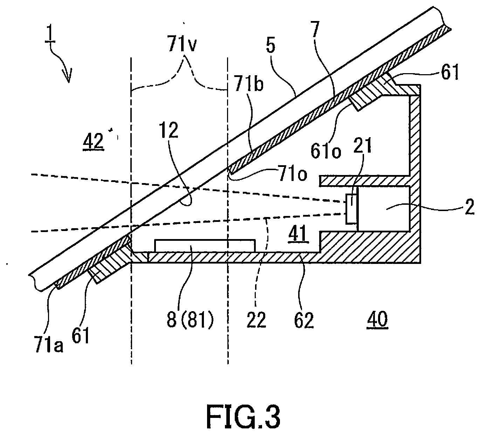

Another embodiment of the windshield 1 according to the present invention is shown in FIG. 3. This embodiment differs from the first embodiment in that the anti-fogging member 8 is disposed on the fixing and/or light-shielding member, in particular on the cover 62, rather than on the glass sheet 5. In the other respects, this embodiment is the same as the first embodiment. The features including the properties of the water-absorbing film will not be described if the features are identical to those of the first embodiment.

The anti-fogging member 8 is disposed on a surface of the cover 62, the surface being in contact with the light path space 41. This configuration is not limiting, and the anti-fogging member 8 may be disposed on a surface of a fixing and/or light-shielding member other than the cover 62, the surface being in contact with the light path space 41. The location on the surface where the anti-fogging member 8 is disposed is desirably, but not limited to, a location close to the glass sheet 5, especially when wet air is expected to flow into the light path space 41 from the vehicle interior space 40 along the surface of the glass sheet 5. In this case, it is recommended to dispose the anti-fogging member 8 in such a manner that at least part of the anti-fogging member 8 overlaps the opening 71o of the shielding film when viewed in the vertical direction, more particularly in such a manner that at least part of the anti-fogging member 8 lies within an area defined by imaginary planes 71v extending in the vertical direction and tangent to the periphery of the opening 71o.

As understood from FIG. 3, the anti-fogging member 8 disposed on the cover 62 in proximity to the glass sheet 5 may, when being extremely thick, overlap the light path 22 to block light. As described later, forming the anti-fogging member 8 as a film-like laminate makes it easy to dispose the anti-fogging member 8 at a location close to the glass sheet 5 without disturbing light reception by the information acquisition device 2. From this viewpoint, the overall thickness of the anti-fogging member 8 is preferably 0.5 mm or less and particularly preferably 0.2 mm or less.

In FIG. 3, no film lies on the information transmission region 12 of the glass sheet 5, and the glass surface of the information transmission region 12 is exposed to the light path space 41. This embodiment is advantageous for ensuring high light transmittance of the glass sheet 5. In this embodiment, however, an additional anti-fogging member 8 or water-absorbing film 81 may, as described for the first embodiment, be disposed on the interior-facing surface of the glass sheet 5 so as to cover the information transmission region 12.

### (Third embodiment)

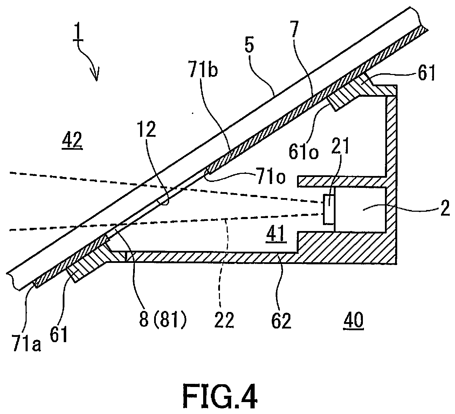

Still another embodiment of the windshield 1 according to the present invention is shown in FIG. 4. This embodiment differs from the first embodiment in that the anti-fogging member 8 or water-absorbing film 81 is disposed in contact with the entire periphery of the opening 71o of the shielding film 7. In the other respects, this embodiment is the same as the first embodiment. Also for this embodiment, the features identical to those of the first embodiment will not be described. This embodiment is particularly suitable when the water-absorbing film 81 is formed as a single-layer film on the surface of the glass sheet 5.

In this embodiment, the region where the water-absorbing film 81 is disposed is bounded by the shielding film 7 and coincides with the opening 71o of the shielding film 7. The water-absorbing film 81 can be disposed in this manner by, in particular, using the opening 71o of the shielding film 7 as a region into which a film-forming solution for forming the water-absorbing film 81 is poured. This embodiment offers the production-related advantage of allowing a liquid-phase film formation process to form the water-absorbing film 81 with a thickness defined by the thickness of the shielding film 7 (i.e., a thickness equal to or smaller than the thickness of the shielding film 7) on a region defined by the opening 71o of the shielding film 7.

### (Fourth embodiment)

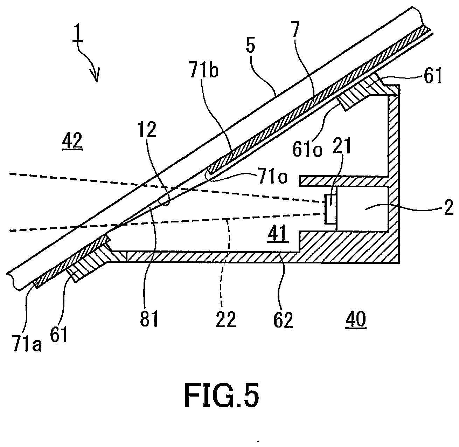

Still another embodiment of the windshield 1 according to the present invention is shown in FIG. 5. This embodiment differs from the third embodiment in that the water-absorbing film 81 is formed to extend beyond the upper peripheral edge of the opening 71o and cover part of the shielding film 7. In the other respects, this embodiment is the same as the third embodiment. Also for this embodiment, the features previously described will not be described again.

In this embodiment, part of the shielding film 7 is also used as a surface on which the water-absorbing film 81 is disposed, and the water-absorbing film 81 extends over a wide area. The glass sheet 5 forming the windshield in this embodiment can be fabricated by forming the shielding film 7 and then by applying a film-forming solution for forming the water-absorbing film 81 into the opening 71o of the shielding film 7 while holding the glass sheet 5 in a position such that the upper peripheral edge faces downward.

### [Glass product for windshield]

A glass product for a windshield is constituted, for example, by the members, other than the fixing and/or light shielding members 61 and 62, of the windshield 1 described in the above embodiments. This glass product includes, for example, the glass sheet 5, the shielding film 7 formed on a surface of the glass sheet 5, and the water-absorbing film 81 disposed in the opening 71o or a recess 71r of the shielding film 7. The anti-fogging member 8 including the water-absorbing film 81 may be used in place of the film. Embodiments of the glass product for a windshield can be understood by referring to the above embodiments. The glass product will therefore not be described further.

### [Anti-fogging member]

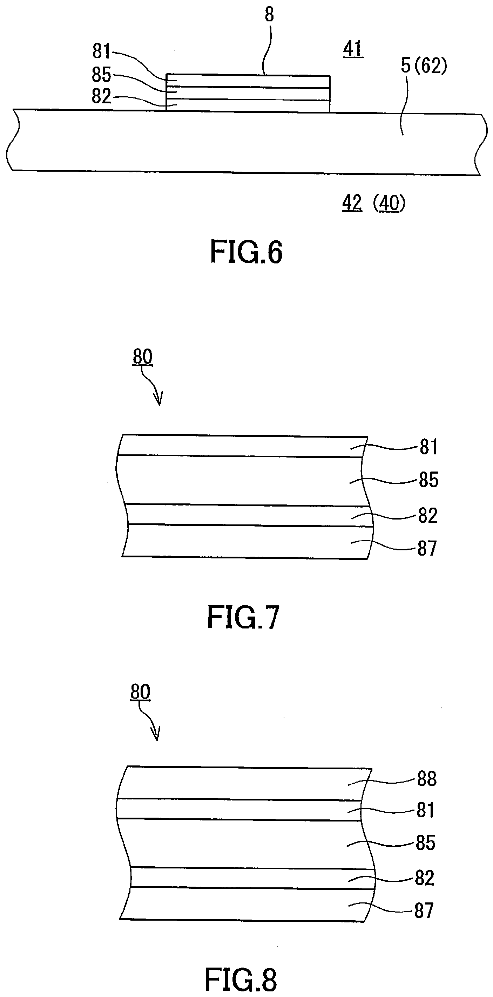

FIG. 6 is a cross-section showing a situation where an embodiment of the anti-fogging member 8 is disposed. The anti-fogging member 8 includes a substrate 85, the water-absorbing film 81 supported on a surface (first surface) of the substrate 85, and an adhesive layer 82 formed on the opposite surface (second surface) of the substrate 85. The water-absorbing film 81 is provided as the uppermost layer of the anti-fogging member 8 which is in the form of a laminate, and the water-absorbing film 81 is exposed to the light path space 41. The adhesive layer 82 is fixed to the interior-facing surface of the glass sheet 5 or the surface of another member such as the cover 62, and thus the anti-fogging member 8 is adhered to the surface of the glass sheet 5 or the other member.

The anti-fogging member 8 including the adhesive layer 82 offers the advantage of allowing the water-absorbing film 81 to be easily disposed at an appropriate location. The anti-fogging member 8 may be prepared in a form where a release liner 87 such as release paper is attached to the adhesive layer 82. FIG. 7 shows a cross-section of an example of an anti-fogging member 80 lined with a release liner. The lined anti-fogging member 80 may be made in the form of a long sheet, and the long sheet may be wound to prepare a roll of the anti-fogging member 80, which is convenient for storage and transportation. The anti-fogging member 8 is adhered to an appropriate location by unwinding the roll of the lined anti-fogging member 80 while peeling the anti-fogging member 8 from the release liner 87.

As shown in FIG. 8, the lined anti-fogging member 80 may include, in addition to the first release liner 87 attached to the adhesive layer 82, a second release liner 88 attached to the surface of the water-absorbing film 81 remote from the substrate 85. The second release liner 88 has the function of protecting the water-absorbing film 81 and is removed after the anti-fogging member 8 is disposed.

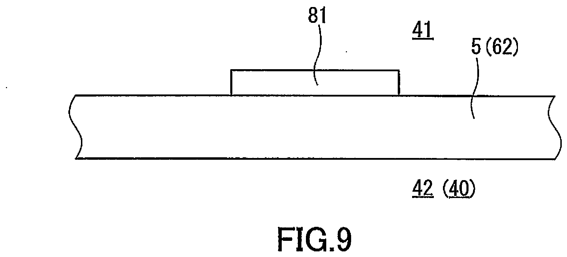

As previously described and as shown in FIG. 9, the water-absorbing film 81 may be disposed alone in place of the anti-fogging member 8. In this case, the water-absorbing film 81 may typically be a single-layer film formed directly on the glass sheet 5. This embodiment eliminates the need for the substrate 80 and the adhesive layer 82 and is therefore advantageous in terms of material cost reduction.

In some cases, the presence of the substrate 80 may be advantageous for ensuring the accuracy of acquired information. Firstly, the substrate 80 can be expected to exhibit heat insulating effect. Secondly, the level difference between the periphery of the anti-fogging member 8 and the neighboring region is increased thanks to the thickness of the substrate 80, and thus intrusion of water droplets from the neighboring region can be more reliably prevented. These can be advantageous when, as shown in FIG. 1, the water-absorbing film 81 is to be disposed on a surface of the glass sheet 5. To obtain such advantages, the thickness of the substrate 80 is preferably 75 µm or more, more preferably 100 µm or more, even more preferably 110 µm or more, and particularly preferably 120 µm or more and may be 155 µm or more in some cases. The use of an extremely thick substrate 80 may decrease the light transmittance. In view of this, the desired thickness of the substrate 80 is 200 µm or less.

From the first viewpoint described above, it is preferable to use a material having low heat conductivity as the substrate 80. The heat conductivity is preferably 5 × 10⁻⁴ cal/cm • sec°C or less, more preferably 4.5 × 10⁻⁴ callcm • sec°C or less, and particularly preferably 4 × 10⁻⁴ cal/cm • sec°C or less.

Next, the members and films constituting the windshield 1 or anti-fogging member 8 will be described in detail.

### <Glass sheet/laminated glass>

A laminated glass is typically used as the glass sheet forming the windshield. In general, the laminated glass includes an inner glass sheet and an outer glass sheet, and these glass sheets are joined together by a resinous interlayer disposed between the glass sheets. Each glass sheet may be a known glass sheet such as one called clear glass, green glass, or UV green glass. It should be noted that the composition of the glass sheet needs to be chosen to allow the laminated glass 5 to have a visible transmittance meeting the national standard (e.g., a visible transmittance of 70% or more or 75% or more).

The thickness of the laminated glass is not particularly limited. The total thickness of the outer and inner glass sheets may be, for example, 2.1 to 6 mm, and is preferably 2.4 to 3.8 mm, more preferably 2.6 to 3.4 mm, and particularly preferably 2.7 to 3.2 mm, in terms of weight reduction.

The interlayer can be made from a known resin such as a polyvinyl butyral resin or an ethylene-vinyl acetate copolymer resin. The interlayer may be single-layered or multi-layered. An example of the multi-layered interlayer is a three-layered interlayer composed of a soft core layer sandwiched by outer layers harder than the core layer.

If necessary, functional fine particles may be dispersed in the interlayer. The functional fine particles used can be fine particles of any of various oxides, nitrides, metals, and organic compounds. Examples of preferred functional fine particles include ATO (conductive antimony-containing tin oxide) and ITO (conductive tin-containing indium oxide). The particle diameter of the functional fine particles is preferably, but not limited to, 0.2 µm or less and may be, for example, 0.001 to 0.15 µm.

### <Shielding film>

Next, the shielding film 7 will be described. The shielding film 7 is often called a "ceramic print" and functions as a mask that blocks the view from the surroundings of the vehicle. The shielding film 7 can be formed by printing a ceramic paste into a predetermined pattern and baking the printed ceramic paste. The ceramic paste is, for example, a mixture of a black pigment, glass frit which is thermally fused with the glass sheet to ensure mechanical strength, an organic binder removable through the baking, and an organic solvent such as pine oil for imparting a viscosity suitable for screen printing. The baking of the ceramic paste can be accomplished simultaneously with bending forming of the glass sheets by heating during the bending forming.

### <Water-absorbing film>

The water-absorbing film 81 contains a water-repellent group and a metal oxide component and further contains a water-absorbing resin. If necessary, the water-absorbing film may further contain an additional functional component. The water-absorbing resin is not limited to specific types and may be any resin capable of absorbing and retaining water. The water-absorbing resin increases the saturated water absorption of the water-absorbing film. The water-repellent group, combined with other components such as the water-absorbing resin, enables the water-absorbing film to readily exhibit the water absorption characteristics in a high humidity region. As described later, the water-repellent group is thought to contribute to trapping of water vapor into the water-absorbing film and improve the water absorption characteristics in a high humidity region. The water-repellent group is provided to the water-absorbing film from a metal compound having the water-repellent group (water-repellent group-containing metal compound) and being a hydrolyzable silicon compound. The metal oxide component can be provided to the water-absorbing film from a metal compound such as the water-repellent group-containing metal compound or another metal compound or from fine metal oxide particles. Hereinafter, the components will be described individually.

### (Water-absorbing resin)

The water-absorbing resin may be, for example, at least one selected from the group consisting of a urethane resin, an epoxy resin, an acrylic resin, a polyvinyl acetal resin, and a polyvinyl alcohol resin. Examples of the urethane resin include a urethane resin composed of a polyisocyanate and a polyol. Preferred polyols are acrylic polyols and polyoxyalkylene polyols. Examples of the epoxy resin include glycidyl ether epoxy resins, glycidyl ester epoxy resins, glycidylamine epoxy resins, and alicyclic epoxy resins. Preferred epoxy resins are alicyclic epoxy resins. A polyvinyl acetal resin (simply referred to as "polyacetal" hereinafter) which is preferred as the water-absorbing resin will be described.

Polyvinyl acetal can be obtained by acetalizing polyvinyl alcohol through condensation reaction of an aldehyde with the polyvinyl alcohol. The acetalization of polyvinyl alcohol may be carried out by a known method such as a precipitation method using an aqueous medium in the presence of an acid catalyst or a dissolution method using a solvent such as an alcohol. The acetalization can be carried out in conjunction with saponification of polyvinyl acetate. The degree of acetalization is preferably 2 to 40 mol%, more preferably 3 to 30 mol%, and particularly preferably 5 to 20 mol%. In some cases, the degree of acetalization is preferably 5 to 15 mol%. The degree of acetalization can be determined, for example, by ¹³C nuclear magnetic resonance spectroscopy. Polyvinyl acetal having a degree of acetalization within the above range is suitable for formation of a water-absorbing film having high water-absorbing performance and high water resistance.

The average degree of polymerization of the polyvinyl alcohol is preferably 200 to 4500 and more preferably 500 to 4500. A high average degree of polymerization is advantageous for formation of a water-absorbing film having high water-absorbing performance and high water resistance. However, an extremely high average degree of polymerization may result in an extremely high solution viscosity, which acts as an obstacle to film formation. The degree of saponification of the polyvinyl alcohol is preferably 75 to 99.8 mol%.

Examples of the aldehyde which is allowed to undergo condensation reaction with the polyvinyl alcohol include aliphatic aldehydes such as formaldehyde, acetaldehyde, butylaldehyde, hexylcarbaldehyde, octylcarbaldehyde, and decylcarbaldehyde. Examples of the aldehyde further include aromatic aldehydes such as: benzaldehyde; alkyl-substituted benzaldehydes such as 2-methylbenzaldehyde, 3-methylbenzaldehyde, and 4-methylbenzaldehyde; halogen-substituted benzaldehydes such as chlorobenzaldehyde; substituted benzaldehydes in which a hydrogen atom is substituted by a functional group other than alkyl groups, such as a hydroxy group, an alkoxy group, an amino group, or a cyano group; and fused aromatic aldehydes such as naphthaldehyde and anthraldehyde. Aromatic aldehydes, which are highly hydrophobic, are advantageous for forming a water-absorbing film having high water resistance with a low degree of acetalization. The use of an aromatic aldehyde is advantageous also for forming a film having high water-absorbing performance while allowing a large amount of hydroxy groups to remain. It is preferable for the polyvinyl acetal to contain an acetal structure derived from an aromatic aldehyde, in particular benzaldehyde.

The content of the water-absorbing resin in the water-absorbing film is preferably 50 mass% or more, more preferably 60 mass% or more, and particularly preferably 65 mass% or more, and is preferably 95 mass% or less, more preferably 90 mass% or less, and particularly preferably 85 mass% or less, in terms of the strength, water-absorbing performance, and anti-fogging performance of the film.

### (Water-repellent group)

The water-repellent group makes it easy to achieve both high strength and high anti-fogging performance of the water-absorbing film and contributes to rendering the surface of the film hydrophobic to ensure the straightness of light entering the film even when water droplets are formed on the surface of the film. In order to obtain sufficient effect of the water-repellent group, it is preferable for the water-repellent group used to have high water repellency. The water-repellent group is at least one selected from: (1) a chain or cyclic alkyl group having 3 to 30 carbon atoms; and (2) a chain or cyclic alkyl group which has 1 to 30 carbon atoms and in which at least one hydrogen atom is substituted by a fluorine atom (this alkyl group may hereinafter be referred to as "fluorine-substituted alkyl group").

For (1) and (2), the chain or cyclic alkyl group is preferably a chain alkyl group. The chain alkyl group is preferably a linear alkyl group, although the chain alkyl group may be a branched alkyl group. An alkyl group having more than 30 carbon atoms may cause whitening of the water-absorbing film. In terms of the balance among the anti-fogging performance, strength, and appearance of the film, the number of carbon atoms in the chain alkyl group is preferably 20 or less and is, for example, 1 to 8 or 4 to 16, and preferably 4 to 8. A particularly preferred alkyl group is a linear alkyl group having 4 to 8 carbon atoms, and examples of such a linear alkyl group include n-pentyl, n-hexyl, n-heptyl, and n-octyl groups. For (2), the fluorine-substituted alkyl group may be a chain or cyclic alkyl group in which only one or some of the hydrogen atoms are substituted by fluorine atoms or may be a chain or cyclic alkyl group, such as a linear perfluoroalkyl group, in which all of the hydrogen atoms are substituted by fluorine atoms. The fluorine-substituted alkyl group has high water repellency, and thus can exhibit a sufficient effect even when added in a small amount. If the content of the fluorine-substituted alkyl group is extremely high, the fluorine-substituted alkyl group may be separated from other components in a coating liquid for forming the film.

### (Hydrolyzable metal compound having water-repellent group)

The water-repellent group is one derived from a water-repellent group-containing hydrolyzable silicon compound. The water-repellent group-containing hydrolyzable metal compound is preferably a water-repellent group-containing hydrolyzable silicon compound represented by the following formula (I).

RₘSiY₄₋ₘ (I)

R is a water-repellent group, i.e., a chain or cyclic alkyl group which has 1 to 30 carbon atoms and in which at least one hydrogen atom may be substituted by a fluorine atom, Y is a hydrolyzable functional group or a halogen atom, and m is an integer of 1 to 3. The hydrolyzable functional group is, for example, at least one selected from an alkoxy group, an acetoxy group, an alkenyloxy group, and an amino group and is preferably an alkoxy group, in particular an alkoxy group having 1 to 4 carbon atoms. The alkenyloxy group is, for example, an isopropenoxy group. The halogen atom is preferably chlorine. The functional groups mentioned as examples can be used also as a "hydrolyzable functional group" which will be described later. Preferably, m is 1 or 2.

Completion of hydrolysis and polycondensation of the compound represented by the formula (I) yields a component represented by the following formula (II).

RₘSiO_{(4-m)/2} (II)

R and m are as defined above. In an actual water-absorbing film, the compound of the formula (II) resulting from hydrolysis and polycondensation forms a network structure in which silicon atoms are bonded to each other via oxygen atoms.

As described above, the compound represented by the formula (I) is hydrolyzed or partially hydrolyzed, and at least part of the hydrolysate is polycondensed to form a siloxane bond (Si-O-Si) network structure composed of alternately linked silicon and oxygen atoms and extending in three dimensions. The water-repellent groups R are attached to the silicon atoms included in the network structure. In other words, the water-repellent groups R are fixed to the siloxane bond network structure via the R-Si bonds. This structure is advantageous for distributing the water-repellent groups R uniformly in the film. It is preferable for the water-absorbing film to contain the water-repellent groups R bonded directly to the silicon atoms. The network structure may contain a silica component introduced from a silicon compound (such as a tetraalkoxysilane or a silane coupling agent) other than the water-repellent group-containing hydrolyzable silicon compound represented by the formula (I). When a silicon compound having no water-repellent group and having a hydrolyzable functional group or halogen atom (non-water-repellent group-containing hydrolyzable silicon compound) is incorporated, together with the water-repellent group-containing hydrolyzable silicon compound, into a coating liquid for forming the water-absorbing film, a siloxane bond network structure can be formed which includes silicon atoms bonded to the water-repellent groups and silicon atoms not bonded to the water-repellent groups. With such a structure, the content of the water-repellent group and the content of the metal oxide component in the water-absorbing film can be easily adjusted independently of each other.

When the water-absorbing film contains a water-absorbing resin, the water-repellent group increases the water vapor permeability through the surface of the water-absorbing film containing the water-absorbing resin, thereby improving the anti-fogging performance of the water-absorbing film. The two functions, water absorbing and water repelling, conflict with each other, and thus it has been conventional to incorporate a water-absorbing material and a water-repelling material separately into different layers. The water-repellent group contained in the water-absorbing film prevents localization of water in the vicinity of the surface of the film and lengthens the time to the occurrence of dew formation, thereby improving the anti-fogging performance of the water-absorbing film. This effect will be described hereinafter.

Water vapor entering the water-absorbing film containing a water-absorbing resin is hydrogen-bonded to hydroxy groups such as those of the water-absorbing resin and is trapped in the form of bound water. As the amount of entering water vapor increases, the form of water in the film shifts from bound water to loosely-bound water and, eventually, water is retained in the form of free water held in voids inside the water-absorbing film. In the water-absorbing film, the water-repellent group impedes the formation of hydrogen bonds and also facilitates the dissociation of formed hydrogen bonds. Although the number of hydroxy groups capable of hydrogen bonding in the film is unchanged as long as the content of the water-absorbing resin remains the same, the water-repellent group decreases the rate of formation of hydrogen bonds. In the water-absorbing film containing the water-repellent group, therefore, water can diffuse in the form of water vapor to the bottom of the film before the water is finally trapped in any of the above forms. Even once water is trapped, the water can be released relatively easily and move in the form of water vapor to the bottom of the coating. Consequently, the distribution of the amount of retained water in the thickness direction of the film is relatively uniform from the vicinity of the surface of the film to the bottom of the film. Thus, the entire thickness of the water-absorbing film can be effectively used to absorb water delivered onto the surface of the film. This leads to reduced formation of water droplets on the surface and hence improvement in anti-fogging performance.

As for a conventional water-absorbing film containing no water-repellent group, water vapor entering the film is very easily trapped in the form of bound water, loosely-bound water, or free water. Thus, the entering water vapor tends to be retained in the vicinity of the surface of the film. Consequently, the amount of water in the film is extremely large in the vicinity of the surface and decreases sharply with decreasing distance to the bottom of the film. This causes saturation of the vicinity of the surface of the film with water and hence formation of water droplets on the surface of the film, even though the bottom region of the film is still able to absorb water. The conventional water-absorbing film therefore has a limited anti-fogging performance.

When a water-repellent group-containing hydrolyzable silicon compound (see the formula (I) is used to introduce the water-repellent group into the water-absorbing film, a strong siloxane bond (Si-O-Si) network structure is formed. The formation of this network structure is advantageous in terms of improvement in abrasion resistance and also in terms of improvement in other properties such as hardness and water resistance.

It is recommended to add the water-repellent group in such an amount that the water contact angle of the surface of the water-absorbing film is 70 degrees or more, preferably 80 degrees or more, and more preferably 90 degrees or more. The value of the water contact angle is defined as one measured by applying a 4-mg water droplet to the surface of the film. In particular, when a methyl group or ethyl group, which has relatively low water repellency, is used as the water-repellent group, it is preferable to incorporate the water-repellent group into the water-absorbing film in an amount sufficient to allow the water contact angle to fall within the above range. The upper limit of the water contact angle is not particularly limited. The water contact angle is, for example, 150 degrees or less, or 120 degrees or less, or even 105 degrees or less. It is preferable to distribute the water-repellent group uniformly in the water-absorbing film so that the water contact angle falls within the above range over the entire surface of the water-absorbing film.

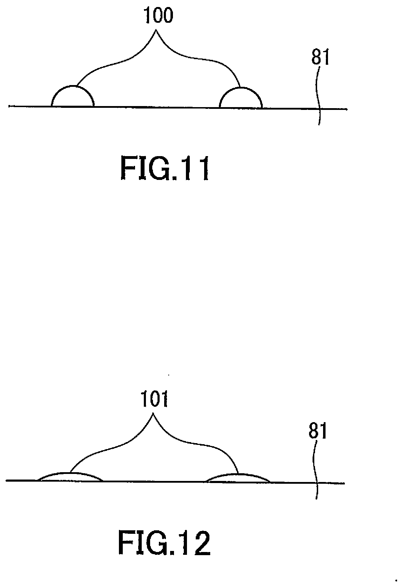

As shown in FIG. 11 and FIG. 12, when water droplets 100 and 101 are formed on the surface of the water-absorbing film 81 as a result of condensation of equal amounts of water vapor, the area occupied by each of the water droplets 100 and 101 on the water-absorbing film 81 decreases as the water contact angle of the surface increases. A decrease in the area occupied by the water droplets 100 and 101 reduces the proportion of the area at which light incident on the water-absorbing film 81 is scattered. This means that the water-absorbing film 81 having a high water contact angle due to the presence of the water-repellent group is advantageous for ensuring the straightness of light passing through the water-absorbing film 81 on the surface of which water droplets have been formed.

It is preferable for the water-absorbing film to contain the water-repellent group in such an amount that the water contact angle falls within the preferred range described above. When the water-absorbing film contains a water-absorbing resin, it is preferable for the water-absorbing film to contain the water-repellent group in an amount of 0.05 parts by mass or more, preferably 0.1 parts by mass or more, or more preferably 0.3 parts by mass or more, and 10 parts by mass or less or preferably 5 parts by mass or less, with respect to 100 parts by mass of the water-absorbing resin.

### (Metal oxide component)

The water-absorbing film contains a metal oxide component. A metal oxide component is, for example, an oxide of at least one element selected from Si, Ti, Zr, Ta, Nb, Nd, La, Ce, and Sn, but according to the invention it contains silicon oxide (silica component). When the water-absorbing film contains a water-absorbing resin, it is preferable for the water-absorbing film to contain the metal oxide component in an amount of 0.01 parts by mass or more, preferably 0.1 parts by mass or more, more preferably 0.2 parts by mass or more, even more preferably 1 part by mass or more, particularly preferably 5 parts by mass or more, in some cases 7 parts by mass or more, or, if desired, 10 parts by mass or more and 60 parts by mass or less, in particular 50 parts by mass or less, preferably 40 parts by mass or less, more preferably 30 parts by mass or less, particularly preferably 20 parts by mass or less, or in some cases 18 parts by mass or less, with respect to 100 parts by mass of the water-absorbing resin. The metal oxide component is a component essential for ensuring the strength, in particular scratch resistance, of the film. However, an extremely high content of the metal oxide component leads to deterioration of the anti-fogging performance of the film.

At least part of the metal oxide component may be a metal oxide component derived from a hydrolyzable metal compound or its hydrolysate which is added to a coating liquid for forming the water-absorbing film. The hydrolyzable metal compound is at least one selected from: a) a metal compound having a water-repellent group and a hydrolyzable functional group or halogen atom (water-repellent group-containing hydrolyzable metal compound); and b) a metal compound having no water-repellent group and having a hydrolyzable functional group or halogen atom (non-water-repellent group-containing hydrolyzable metal compound). A metal oxide component derived from the hydrolyzable metal compound a) and/or b) is an oxide of the metal element of the hydrolyzable metal compound. The metal oxide component may include a metal oxide component derived from fine metal oxide particles added to a coating liquid for forming the water-absorbing film and a metal oxide component derived from a hydrolyzable metal compound or its hydrolysate which is added to the coating liquid. Also in this case, the hydrolyzable metal compound is at least one selected from the above compounds a) and b). The compound b), namely the hydrolyzable metal compound having no water-repellent group, may include at least one selected from a tetraalkoxysilane and a silane coupling agent. Hereinafter, only the fine metal oxide particles and the compound b) will be described, since the compound a) has been previously described.

### (Fine metal oxide particles)

The water-absorbing film may further contain fine metal oxide particles as at least part of the metal oxide component. The metal oxide forming the fine metal oxide particles is, for example, an oxide of at least one element selected from Si, Ti, Zr, Ta, Nb, Nd, La, Ce, and Sn, and the fine metal oxide particles are preferably fine silica particles. The fine silica particles can be introduced into the film, for example, by adding colloidal silica. The fine metal oxide particles have a high ability to transfer a stress imposed on the water-absorbing film to a transparent article supporting the film and also have high hardness. The addition of the fine metal oxide particles is therefore advantageous in terms of improvement in abrasion resistance and scratch resistance of the water-absorbing film. The addition of the fine metal oxide particles to the water-absorbing film results in formation of minute voids in portions with which the fine particles are in contact or in proximity to which the fine particles are located. These voids enable easy entry of water vapor into the film. Thus, the addition of the fine metal oxide particles may have an advantageous effect on improvement in anti-fogging performance. The fine metal oxide particles can be provided to the water-absorbing film by adding the preformed fine metal oxide particles to a coating liquid for forming the water-absorbing film.

If the average particle diameter of the fine metal oxide particles is extremely large, the film may whiten, while if the average particle diameter is extremely small, the fine metal oxide particles are likely to be aggregated and are difficult to uniformly disperse. In view of this, the preferred average particle diameter of the fine metal oxide particles is 1 to 20 nm, in particular 5 to 20 nm. The average particle diameter of the fine metal oxide particles, as described herein, refers to that of primary particles. The average particle diameter of the fine metal oxide particles is defined as an average of particle diameters measured for 50 randomly selected particles by observation with a scanning electron microscope. An extremely high content of the fine metal oxide particles may decrease the water absorption of the film as a whole and cause whitening of the film. When the water-absorbing film contains a water-absorbing resin, it is recommended to add the fine metal oxide particles in an amount of 0 to 50 parts by mass, preferably 1 to 30 parts by mass, more preferably 2 to 30 parts by mass, particularly preferably 5 to 25 parts by mass, or in some cases 10 to 20 parts by mass, with respect to 100 parts by mass of the water-absorbing resin.

### (Hydrolyzable metal compound having no water-repellent group)

The water-absorbing film may contain a metal oxide component derived from a hydrolyzable metal compound having no water-repellent group (non-water-repellent group-containing hydrolyzable compound). A preferred non-water-repellent group-containing hydrolyzable metal compound is a hydrolyzable silicon compound having no water-repellent group. The hydrolyzable silicon compound having no water-repellent group is, for example, at least one silicon compound selected from silicon alkoxide, chlorosilane, acetoxysilane, alkenyloxysilane, and aminosilane (it should be noted that the at least one silicon compound has no water-repellent group) and is preferably silicon alkoxide having no water-repellent group. An example of the alkenyloxysilane is isopropenoxysilane.

The hydrolyzable silicon compound having no water-repellent group may be a compound represented by the following formula (III).

SiY₄ (III)

As described above, Y is a hydrolyzable functional group and preferably at least one selected from an alkoxy group, an acetoxy group, an alkenyloxy group, an amino group, and a halogen atom.

The non-water-repellent group-containing hydrolyzable metal compound is hydrolyzed or partially hydrolyzed, and at least part of the hydrolysate is polycondensed to produce a metal oxide component in which metal atoms and oxygen atoms are bonded to each other. This component can provide a strong bonding between the fine metal oxide particles and the water-absorbing resin and contribute to improvement in the properties such as the abrasion resistance, hardness, and water resistance of the water-absorbing film. When the water-absorbing film contains a water-absorbing resin, it is recommended that the content of the metal oxide component derived from the hydrolyzable metal compound having no water-repellent group be 0 to 40 parts by mass, preferably 0.1 to 30 parts by mass, more preferably 1 to 20 parts by mass, particularly preferably 3 to 10 parts by mass, and in some cases 4 to 12 parts by mass, with respect to 100 parts by mass of the water-absorbing resin.

A preferred example of the hydrolyzable silicon compound having no water-repellent group is a tetraalkoxysilane, in particular a tetraalkoxysilane having an alkoxy group having 1 to 4 carbon atoms. The tetraalkoxysilane is, for example, at least one selected from tetramethoxysilane, tetraethoxysilane, tetra-n-propoxysilane, tetraisopropoxysilane, tetra-n-butoxysilane, tetraisobutoxysilane, tetra-sec-butoxysilane, and tetra-tert-butoxysilane.

An extremely high content of the metal oxide (silica) component derived from the tetraalkoxysilane may deteriorate the anti-fogging performance of the water-absorbing film. This is partly because the water-absorbing film has a reduced flexibility, due to which the swelling and shrinkage of the film upon absorption and release of water are limited. When the water-absorbing film contains a water-absorbing resin, it is recommended to add the metal oxide component derived from the tetraalkoxysilane in an amount of 0 to 30 parts by mass, preferably 1 to 20 parts by mass, or more preferably 3 to 10 parts by mass, with respect to 100 parts by mass of the water-absorbing resin.

Another preferred example of the hydrolyzable silicon compound having no water-repellent group is a silane coupling agent. The silane coupling agent is a silicon compound having reactive functional groups different from each other. It is preferable that part of the reactive functional groups be a hydrolyzable functional group. The silane coupling agent is, for example, a silicon compound having a hydrolyzable functional group and an epoxy group and/or amino group. Preferred examples of the silane coupling agent include glycidyloxyalkyltrialkoxysilane and aminoalkyltrialkoxysilane. In these silane coupling agents, the number of carbon atoms in the alkylene group directly bonded to the silicon atom is preferably 1 to 3. The glycidyloxyalkyl group and aminoalkyl group contain a hydrophilic functional group (epoxy group or amino group) and thus are not water-repellent as a whole, despite containing an alkylene group.

The silane coupling agent can provide a strong bonding between the water-absorbing resin which is an organic component and the fine metal oxide particles which are an inorganic component and contribute to improvement in the properties such as the abrasion resistance, hardness, and water resistance of the water-absorbing film. However, an extremely high content of the metal oxide (silica) component derived from the silane coupling agent deteriorates the anti-fogging performance of the water-absorbing film and may cause whitening of the water-absorbing film. When the water-absorbing film contains a water-absorbing resin, it is recommended to add the metal oxide component derived from the silane coupling agent in an amount of 0 to 10 parts by mass, preferably 0.05 to 5 parts by mass, or more preferably 0.1 to 2 parts by mass, with respect to 100 parts by mass of the water-absorbing resin.

### (Cross-linked structure)

The water-absorbing film may contain a cross-linked structure derived from a crosslinking agent, preferably from at least one crosslinking agent selected from an organoboron compound, an organotitanium compound, and an organozirconium compound. The introduction of the cross-linked structure improves the abrasion resistance, scratch resistance, and water resistance of the water-absorbing film. From another point of view, the introduction of the cross-linked structure facilitates improvement in the durability of the water-absorbing film without sacrificing the anti-fogging performance of the water-absorbing film.

When the cross-linked structure derived from the crosslinking agent is introduced into the water-absorbing film containing a silica component as the metal oxide component, the water-absorbing film may contain not only silicon atoms but also metal atoms other than silicon atoms, which are preferably boron, titanium, or zirconium atoms.

The type of the crosslinking agent is not particularly limited as long as the crosslinking agent allows cross-linking of the water-absorbing resin used. Examples of the organotitanium compound are only described hereinafter. The organotitanium compound is, for example, at least one selected from a titanium alkoxide, a titanium chelate compound, and a titanium acylate. The titanium alkoxide is, for example, titanium tetraisopropoxide, titanium tetra-n-butoxide, or titanium tetraoctoxide. The titanium chelate compound is, for example, titanium acetylacetonate, titanium ethyl acetoacetate, titanium octylene glycol, titanium triethanolamine, or titanium lactate. The titanium lactate may be an ammonium salt (titanium ammonium lactate). The titanium acylate is, for example, titanium stearate. A preferred organotitanium compound is a titanium chelate compound, in particular titanium lactate.

A crosslinking agent preferred when the water-absorbing resin is polyvinyl acetal is an organotitanium compound, in particular titanium lactate.

### (Other optional components)

The water-absorbing film may contain an additive. Examples of the additive include glycols such as glycerin and ethylene glycol which can function to improve the anti-fogging performance. The additive may be a surfactant, a leveling agent, an ultraviolet absorber, a colorant, an anti-foaming agent, or a preservative.

### (Film thickness)

The thickness of the water-absorbing film 81 may be adjusted as appropriate depending on the required properties such as the water absorption characteristics. The thickness of the water-absorbing film 81 is preferably 1 to 20 µm, more preferably 2 to 15 µm, and particularly preferably 3 to 10 µm.

### (Example of formation of water-absorbing film)

The water-absorbing film 81 can be formed by applying a coating liquid for forming the water-absorbing film 81 onto a glass sheet (laminated glass), drying the applied coating liquid, and, if necessary, performing a process such as high-temperature high-humidity treatment. The solvent used for preparation of the coating liquid may be a conventionally-known material, and the method used for application of the coating liquid may be a conventionally-known method. In applying the coating liquid, the position assumed by the laminated glass is appropriately controlled and may, if necessary, be changed during or after the application, in order to adjust the thickness and the thickness distribution of the water-absorbing film 81.

In the step of applying the coating liquid, it is preferable that the relative humidity of the ambient atmosphere be maintained at less than 40% or even 30% or less. Maintaining a low relative humidity can prevent the film from excessively absorbing water from the atmosphere. Upon absorption of a large amount of water from the atmosphere, water entering and remaining in the matrix of the film may decrease the strength of the film.

It is preferable for the step of drying the coating liquid to include an air-drying step and a thermal drying step involving heating. It is recommended to perform the air-drying step by exposing the coating liquid to an atmosphere whose relative humidity is maintained at less than 40% or even 30% or less. The air-drying step can be performed as a non-thermal step; namely, this step can be performed at room temperature. When the coating liquid contains a hydrolyzable silicon compound, the thermal drying step entails a dehydration reaction involving silanol groups contained in, for example, a hydrolysate of the silicon compound and hydroxy groups present on the transparent article, in consequence of which a matrix structure composed of silicon atoms and oxygen atoms (Si-O bond network) is developed.

In order to avoid decomposition of organic materials such as the water-absorbing resin, it is recommended that the temperature employed in the thermal drying step should not be extremely high. The appropriate heating temperature in this step is 300°C or lower and is, for example, 100 to 200°C. The heating time is 1 minute to 1 hour.

In forming the water-absorbing film 81, a high temperature-high humidity treatment step may be performed as appropriate. The high temperature-high humidity treatment step may make it easier to ensure both high water-absorbing performance and high strength of the film. The high temperature-high humidity treatment step can be performed, for example, by holding in an atmosphere having a temperature of 50 to 100°C and a relative humidity of 60 to 95% for 5 minutes to 1 hour. The high temperature-high humidity treatment step may be performed after the application step and drying steps or may be carried out after the application step and air-drying step and before the thermal drying step. In the former case, the high temperature-high humidity treatment step may be followed by an additional heat treatment step. This additional heat treatment step can be performed, for example, by holding in an atmosphere having a temperature of 80 to 180°C for 5 minutes to 1 hour.

The water-absorbing film 81 formed from the coating liquid may, if necessary, be washed and/or wiped with a wet cloth. Specifically, the surface of the water-absorbing film 81 may be exposed to running water or wiped with a cloth impregnated with water. Pure water is suitable as the water used in the washing or wiping. It is recommended to avoid the use of a detergent-containing solution for the washing. This step can remove dust or dirt adhering to the surface of the water-absorbing film 81 and result in a clean film surface.

As is apparent from the foregoing description, preferred embodiments of the water-absorbing film include the following.
a) A water-absorbing film containing 0.1 to 60 parts by mass of the metal oxide component and 0.05 to 10 parts by mass of the water-repellent group with respect to 100 parts by mass of the water-absorbing resin.
b) A water-absorbing film in which the water-repellent group is a chain alkyl group having 1 to 8, in particular 4 to 8, carbon atoms, the water-repellent group is bonded directly to a metal atom of the metal oxide component, and the metal atom is a silicon atom.
c) A water-absorbing film in which at least part of the metal oxide component is a metal oxide component derived from a hydrolyzable metal compound or its hydrolysate added to a coating liquid for forming the water-absorbing film, and the hydrolyzable metal compound is at least one selected from the group consisting of a hydrolyzable metal compound having the water-repellent group and a hydrolyzable metal compound having no water-repellent group.
d) The water-absorbing film according to (c), in which the hydrolyzable metal compound having no water-repellent group includes at least one selected from a tetraalkoxysilane and a silane coupling agent.

### <Substrate>

A resin film is suitable as the substrate 85 of the anti-fogging member 8. Examples of the material of the resin film include: polyolefins such as polyethylene and polypropylene; polyesters such as polyethylene terephthalate; and fluororesins such as polycarbonate, polyimide, triacetate, and polytetrafluoroethylene. The preferred thickness and heat conductivity of the substrate 85 are as described above. Examples of resin films having a preferred heat conductivity as described above include "COSMOSHINE A4300" of TOYOBO CO., LTD., which is a polyester film.

### <Adhesive layer>

As the adhesive forming the adhesive layer 82 of the anti-fogging member 8 there can be used any of various adhesives such as a rubber adhesive, an acrylic adhesive, a silicone adhesive, and a urethane adhesive. An acrylic adhesive having high transparency is suitable for the adhesive layer 82 of the anti-fogging member 8 to be attached to the surface of the glass sheet 5. The thickness of the adhesive layer 82 is not particularly limited and may be chosen as appropriate depending on, for example, the type of the adhesive. The thickness is, for example, 1 to 500 µm, in particular 10 to 100 µm.

The following gives examples where various properties of a water-absorbing film formed on a glass sheet were examined. The methods used for evaluation of the properties of prepared samples will be described first.

### (1) Appearance

The sample was visually examined for the transparency and the occurrence of cracking and evaluated according to the following criteria.
Good: The appearance is good.
Average: Slight whitening is observed.
Poor: The film shows unevenness, whitening, and/or cracking, and is problematic for practical use.

### (2) Film thickness

The sample was left in an environment with a room temperature of 20°C and a relative humidity of 50% for 1 hour, after which the thickness of the water-absorbing film was measured using α-Step 500, a surface profilometer manufactured by KLA-Tencor Corporation.

### (3) Contact angle

The sample was left in an environment with a room temperature of 20°C and a relative humidity of 50% for 1 hour, after which a contact angle meter (CA-A) manufactured by Kyowa Interface Science Co., Ltd. was used to apply an about 4-µL (= 4-mg) water droplet to the surface of the water-absorbing film and measure the contact angle of the water droplet on the surface of the water-absorbing film.

### (4) Anti-fogging performance

The sample was left in an environment with a room temperature of 20°C and a relative humidity of 30% for 1 hour. Additionally, warm water maintained at 40°C was placed in a constant-temperature water bath, the sample was located above the warm water in such a manner as to expose the water-absorbing film to water vapor, and the time to the detection of fogging of the water-absorbing film was measured. A glass sheet (soda-lime glass sheet) provided with no water-absorbing film was observed to be fogged within 10 seconds. The time to the occurrence of fogging was evaluated according to the following criteria.
Excellent: Fogging was observed after more than 85 seconds.
Good: Fogging was observed after more than 60 seconds but within 85 seconds.
Average: Fogging was observed after more than 30 seconds but within 60 seconds.
Poor: Fogging was observed within 30 seconds.

### (5) Water absorption characteristics

The sample was measured for the water vapor adsorption/desorption characteristics by a constant-volume method using "BELSORP-18PLUS HT", a vapor adsorption measurement instrument manufactured by MicrotracBEL Corp. The measurement temperature was set to 10°C. This measurement gave water absorptions at different relative humidities on an adsorption isotherm (e.g., the water absorption A₇₀ at a relative humidity of 70%), water absorptions at different relative humidities on a desorption isotherm (e.g., the water absorption D₇₀ at a relative humidity of 70%), and the saturated water absorption.

Evaluation was made based on the measured adsorption isotherm and desorption isotherm. That is, a rating of "Good" was given when the isotherms were convex downward over the entire relative humidity region of 20 to 90% (when the conditions A1 and A2 were satisfied); otherwise a rating of "Poor" was given. Additionally, a rating of "Good" was given when a value obtained by subtracting the water absorption A₇₀ at a relative humidity of 70% on the adsorption isotherm from the water absorption A₉₅ at a relative humidity of 95% on the adsorption isotherm and dividing the resulting difference by the saturated water absorption Ws ((A₉₅ - A₇₀)/Ws) was more than 35% and when a value obtained by subtracting the water absorption D₇₀ at a relative humidity of 70% on the desorption isotherm from the water absorption D₉₅ at a relative humidity of 95% on the desorption isotherm and dividing the resulting difference by the saturated water absorption Ws ((D₉₃ - D₇₀)/Ws) was more than 30% (when the conditions B1 and B2 were satisfied); otherwise a rating of "Poor" was given.

### (Example 1)

A glass vessel was charged with 87.5 mass% of a solution containing a polyvinyl acetal resin ("S-LEC KX-5" manufactured by Sekisui Chemical Co., Ltd.; having a solids content of 8 mass% and a degree of acetalization of 9 mol% and containing an acetal structure derived from benzaldehyde), 0.26 mass% of n-hexyltrimethoxysilane (HTMS; "KBM-3063" manufactured by Shin-Etsu Silicones), 0.10 mass% of 3-glycidoxypropyltrimethoxysilane (GPTMS; "KBM-403" manufactured by Shin-Etsu Silicones, Inc.), 1.39 mass% of tetraethoxysilane (TEOS; "KBE-04" manufactured by Shin-Etsu Silicones, Inc.), 7.86 mass% of an alcohol solvent ("SOLMIX AP-7" manufactured by Japan Alcohol Corporation), 2.87 mass% of purified water, 0.01 mass% of hydrochloric acid as an acid catalyst, and 0.01 mass% of a leveling agent ("KP-341" manufactured by Shin-Etsu Silicones, Inc.). The contents of the vessel were stirred at room temperature (25°C) for 3 hours to prepare a coating liquid for water-absorbing film formation.

Next, the coating liquid was applied onto a washed float glass sheet (soda-lime silicate glass having a thickness of 3.1 mm and a size of 100 × 100 mm) by a flow coating process in an environment with a room temperature of 20°C and a relative humidity of 30%. The coating liquid was dried for 10 minutes in the same environment, and then (preliminary) heating treatment at 120°C was carried out. The heating treatment was followed by a high temperature-high humidity treatment using an atmosphere and duration as previously described and then by an additional heat treatment using an atmosphere and duration as previously described. In this manner, a sample was prepared.

### (Examples 2 and 3)

Coating liquids for water-absorbing film formation were prepared in the same manner as in Example 1 to give compositions shown in Table 1, and samples were prepared in the same manner as in Example 1.

The components of the water-absorbing films and the results of evaluation of the samples are shown in Tables 1 to 3. In Table 1, the amounts of the components are expressed in parts by mass with respect to 100 parts by mass of the water-absorbing resin.

**[Table 1]**

| | | | | (Parts by mass) | | |
|---|---|---|---|---|---|---|
| | Water-absorbing resin | Silica component (SiO₂ + SiO_{1.5}) | | | | Water-repellent group |
| | | Non-water-repellent group-containing silane | | Water-repellent group-containing silane | Total | |
| | | TEOS | GPTMS | | | |
| Example 1 | 100 | 5.7 | 0.31 | 0.95 | 6.97 | 1.55 |
| Example 2 | 100 | 11.4 | 0.62 | 1.90 | 13.95 | 3.10 |
| Example 3 | 100 | 8.0 | 0.62 | 1.90 | 10.52 | 3.10 |

**[Table 2]**

| | Appearance | Thickness (µm) | Contact angle (°) | Anti-fogging performance |
|---|---|---|---|---|
| Example 1 | Good | 7.5 | 91 | Excellent |
| Example 2 | Good | 7.5 | 93 | Good |
| Example 3 | Good | 3.2 | 95 | Excellent |

**[Table 3]**

| | Ws | Adsorption | | Desorption | | A₉₅ | A₈₅ | A₇₀ | (A₉₅-A₇₀)/Ws (%) | D₉₅ | D₇₀ | (D₉₅-D₇₀) /Ws (%) | DA₈₅ |
|---|---|---|---|---|---|---|---|---|---|---|---|---|---|
| | | A1 | B1 | A2 | B2 | | | | | | | | |
| Example 1 | 7.1 | Good | Good | Good | Good | 4.5 | 2.3 | 1.4 | 43.7 | 4.5 | 1.8 | 38.0 | 78 |
| Example 2 | 3.7 | Good | Good | Good | Good | 2.3 | 1.2 | 0.7 | 43.2 | 2.3 | 0.9 | 37.8 | 77 |
| Example 3 | 2.1 | Good | Good | Good | Good | 1.2 | 0.7 | 0.4 | 38.1 | 1.2 | 0.5 | 33.3 | 82 |

| | | | | | | | | | | | | | |
|---|---|---|---|---|---|---|---|---|---|---|---|---|---|
| *Aₓₓ and Dₓₓ respectively denote water absorptions (g/m²) at a relative humidity of XX% on adsorption/desorption isotherms. DA₈₅ denotes a relative humidity (%) on the desorption isotherm at which a water absorption corresponding to the water absorption at a relative humidity of 85% on the adsorption isotherm is located. Ws denotes the saturated water vapor amount (g/m²). | | | | | | | | | | | | | |

It was confirmed that an anti-fogging member fabricated in the same manner as above, except for using instead of the glass sheet a polyester film ("COSMOSHINE A4300" of TOYOBO CO., LTD.) having a back side with a preformed adhesive layer, can exhibit practically desired anti-fogging performance comparable to that described above, adsorption/desorption isotherms similar to those described above, and a visible transmittance of as high as 90% or more.

## Claims

1. A windshield (1) suitable for installation of an information acquisition device (2) that receives light entering an interior of a vehicle (40) to acquire information about surroundings of the vehicle,
the windshield (1) comprising:
a glass sheet (5); and
a fixing and/or light-shielding member (61, 62) serving at least one function selected from fixing of the information acquisition device (2) to the glass sheet (5) and light shielding between a light path space (41) including a light path (22) taken by the light traveling in the interior of the vehicle and an occupant space of the interior of the vehicle, wherein
- a water-absorbing film (81)
-- is disposed on a surface in contact with the light path space (41), the surface being at least one selected from a surface of the glass sheet (5) and a surface of the fixing and/or light-shielding member (61, 62),
-- contains a silicon oxide-containing metal oxide component and a water-absorbing resin,
-- is provided with a water-repellent group derived from a water-repellent group-containing hydrolyzable silicon compound of the formula RₘSiY₄₋ₘ, in which Y is a hydrolyzable functional group, m is an integer of 1 to 3, and R is a chain or cyclic alkyl group having 3 to 30 carbon atoms, or R is a chain or cyclic alkyl group which has 1 to 30 carbon atoms and in which at least one hydrogen atom is substituted by a fluorine atom, and
-- has a saturated water absorption Ws per unit film area of 1 g/m² or more, and
- at least one condition selected from the following conditions A1 and B1 is satisfied:
(A1) in an orthogonal coordinate system which has an abscissa representing relative humidity and an ordinate representing amount of adsorbed water vapor and in which the value of the saturated water absorption is located above an origin on the ordinate, a water vapor adsorption isotherm of the water-absorbing film is a downwardly convex curve in an interval where the relative humidity is 20 to 90%; and
(B1) when an increase in water absorption of the water-absorbing film with increasing relative humidity from 70% to 95% on the water vapor adsorption isotherm of the water-absorbing film is defined as AbH, the increase in water absorption AbH is more than 35% of the saturated water absorption Ws,
wherein the saturated water absorption, the adsorption isotherm, and the water absorption are measured at a temperature of 10°C.

2. The windshield (1) according to claim 1, wherein the water-repellent group is a chain alkyl group, preferably a linear alkyl group, and the number of carbon atoms in the chain alkyl group is preferably 1 to 8 or 4 to 16, and preferably 4 to 8, and the chain alkyl group is preferably an n-hexyl group.

3. The windshield (1) according to claim 1 or 2, wherein the water-absorbing film (81) satisfies at least the condition A1.

4. The windshield (1) according to claim 3, wherein the water-absorbing film (81) further satisfies condition A2 that in the orthogonal coordinate system, a water vapor desorption isotherm of the water-absorbing film is a downwardly convex curve in an interval where the relative humidity is 20 to 90%.

5. The windshield (1) according to any one of claims 1 to 4, wherein the water-absorbing film (81) satisfies at least the condition B1.

6. The windshield (1) according to claim 5, wherein the water-absorbing film (81) further satisfies condition B2 that when a decrease in water absorption of the water-absorbing film with decreasing relative humidity from 95% to 70% on a water vapor desorption isotherm of the water-absorbing film is defined as DeH, the decrease in water absorption DeH is more than 30% of the saturated water absorption Ws.

7. The windshield (1) according to any one of claims 1 to 6, wherein the water-absorbing film (81) further satisfies condition C that in the orthogonal coordinate system, a water absorption DA₈₅ of the water-absorbing film on the desorption isotherm is located at a relative humidity of 75% or more, the water absorption DA₈₅ corresponding to a water absorption A₈₅ of the water-absorbing film at a relative humidity of 85% on the adsorption isotherm.

8. The windshield (1) according to any one of claims 1 to7, wherein a substrate (85) and an adhesive layer (82) are provided between the water-absorbing film (81) and the surface in contact with the light path space (41), the substrate (85) having a first surface supporting the water-absorbing film (81), the adhesive layer (82) being in contact with a second surface of the substrate, the second surface being opposite to the first surface.

9. The windshield (1) according to any one of claims 1 to 8, wherein the water-absorbing film (81) is disposed at least on the surface of the fixing and/or light-shielding member (61, 62) that is in contact with the light path space (41).

10. The windshield (1) according to any one of claims 1 to 9, wherein the water-absorbing film (81) is disposed at least on the surface of the glass sheet that is in contact with the light path space (41).

11. The windshield (1) according to claim 10, wherein the water-absorbing film (81) is formed directly on the surface of the glass sheet (5) that is in contact with the light path space (41).

12. The windshield (1) according to any one of claims 1 to 11, wherein a water contact angle as measured by applying a 4-mg water droplet to a surface of the water-absorbing film (81) is 70 degrees or more.

13. A glass product for a windshield (1), the glass product comprising a glass sheet (5) and a water-absorbing film (81) disposed on a surface of the glass sheet, wherein
- the water-absorbing film (81)
-- contains a silicon oxide-containing metal oxide component, and a water-absorbing resin,
-- is provided with a water-repellent group derived from a water-repellent group-containing hydrolyzable silicon compound of the formula RₘSiY₄₋ₘ, in which Y is a hydrolyzable functional group, m is an integer of 1 to 3, and R is a chain or cyclic alkyl group having 3 to 30 carbon atoms, or R is a chain or cyclic alkyl group which has 1 to 30 carbon atoms and in which at least one hydrogen atom is substituted by a fluorine atom, and
-- has a saturated water absorption Ws per unit film area of 1 g/m² or more, and
- at least one condition selected from the following conditions A1 and B1 is satisfied:
(A1) in an orthogonal coordinate system which has an abscissa representing relative humidity and an ordinate representing amount of adsorbed water vapor and in which the value of the saturated water absorption is located above an origin on the ordinate, a water vapor adsorption isotherm of the water-absorbing film is a downwardly convex curve in an interval where the relative humidity is 20 to 90%; and
(B1) when an increase in water absorption of the water-absorbing film with increasing relative humidity from 70% to 95% on the water vapor adsorption isotherm of the water-absorbing film is defined as AbH, the increase in water absorption AbH is more than 35% of the saturated water absorption Ws,
wherein the saturated water absorption, the adsorption isotherm, and the water absorption are measured at a temperature of 10°C.

14. The glass product for a windshield (1) according to claim 13, wherein the water-repellent group is a chain alkyl group, preferably a linear alkyl group, and the number of carbon atoms in the chain alkyl group is preferably 1 to 8 or 4 to 16, and preferably 4 to 8, and the chain alkyl group is preferably an n-hexyl group.

15. An anti-fogging member (8) comprising a substrate, a water-absorbing film (81) supported on a first surface of the substrate (85), and an adhesive layer (82) formed on a second surface of the substrate, the second surface being opposite to the first surface, wherein
- the water-absorbing film (81)
-- contains a silicon oxide-containing metal oxide component and a water-absorbing resin,
-- is provided with a water-repellent group derived from a water-repellent group-containing hydrolyzable silicon compound of the formula RₘSiY₄₋ₘ, in which Y is a hydrolyzable functional group, m is an integer of 1 to 3, and R is a chain or cyclic alkyl group having 3 to 30 carbon atoms, or R is a chain or cyclic alkyl group which has 1 to 30 carbon atoms and in which at least one hydrogen atom is substituted by a fluorine atom, and
-- has a saturated water absorption Ws per unit film area of 1 g/m² or more, and
- at least one condition selected from the following conditions A1 and B1 is satisfied:
(A1) in an orthogonal coordinate system which has an abscissa representing relative humidity and an ordinate representing amount of adsorbed water vapor and in which the value of the saturated water absorption is located above an origin on the ordinate, a water vapor adsorption isotherm of the water-absorbing film is a downwardly convex curve in an interval where the relative humidity is 20 to 90%; and
(B1) when an increase in water absorption of the water-absorbing film with increasing relative humidity from 70% to 95% on the water vapor adsorption isotherm of the water-absorbing film is defined as AbH, the increase in water absorption AbH is more than 35% of the saturated water absorption Ws,
wherein the saturated water absorption, the adsorption isotherm, and the water absorption are measured at a temperature of 10°C.

16. The anti-fogging member (8) according to claim 15, wherein the water-repellent group is a chain alkyl group, preferably a linear alkyl group, and the number of carbon atoms in the chain alkyl group is preferably 1 to 8 or 4 to 16, and preferably 4 to 8, and the chain alkyl group is preferably an n-hexyl group.

## Patentansprüche

1. Windschutzscheibe (1), die für einen Einbau einer Informationserfassungsvorrichtung (2) geeignet ist, die Licht erhält, das in einen Innenraum eines Fahrzeugs (40) eintritt, um Informationen über Umgebungen des Fahrzeugs zu erfassen,
die Windschutzscheibe (1) umfassend:
eine Glasscheibe (5); und
ein Befestigungs- und/oder Lichtabschirmungselement (61, 62), das mindestens einer Funktion dient, die ausgewählt ist aus einem Befestigen der Informationserfassungsvorrichtung (2) an der Glasscheibe (5) und Lichtabschirmung zwischen einem Lichtpfadraum (41), der einen Lichtpfad (22) beinhaltet, der von dem Licht genommen wird, das sich in dem Innenraum des Fahrzeugs ausbreitet, und einem Insassenraum des Innenraums des Fahrzeugs, wobei
eine wasserabsorbierende Folie (81)
-- auf einer Oberfläche angeordnet ist, die mit dem Lichtpfadraum (41) in Kontakt ist, wobei die Oberfläche mindestens eine ist, die ausgewählt ist aus einer Oberfläche der Glasscheibe (5) und einer Oberfläche des Befestigungs- und/oder Lichtabschirmungselements (61, 62),
-- eine siliciumoxidhaltige Metalloxidkomponente und ein wasserabsorbierendes Harz enthält,
-- mit einer wasserabweisenden Gruppe versehen ist, die abgeleitet ist von einer wasserabweisenden Gruppe, die eine hydrolysierbare Siliciumverbindung der Formel RₘSiY₄₋ₘ enthält, in der Y eine hydrolysierbare funktionelle Gruppe ist, m eine ganze Zahl von 1 bis 3 ist und R eine kettenförmige oder zyklische Alkylgruppe ist, die 3 bis 30 Kohlenstoffatome aufweist, oder R eine kettenförmige oder zyklische Alkylgruppe ist, die 1 bis 30 Kohlenstoffatome aufweist und in der mindestens ein Wasserstoffatom durch ein Fluoratom substituiert ist, und
-- eine gesättigte Wasserabsorption Ws pro Folienflächeneinheit von 1 g/m² oder mehr aufweist, und
- mindestens eine Bedingung, ausgewählt aus den folgenden Bedingungen A1 und B1, erfüllt ist:
(A1) in einem orthogonalen Koordinatensystem, das eine Abszisse, die die relative Luftfeuchtigkeit darstellt, und eine Ordinate, die die Menge an adsorbiertem Wasserdampf darstellt, aufweist, und in dem der Wert der gesättigten Wasserabsorption sich oberhalb eines Ursprungs auf der Ordinate befindet, eine Wasserdampfadsorptionsisotherme der wasserabsorbierenden Folie eine nach unten konvexe Kurve in einem Intervall ist, in dem die relative Luftfeuchtigkeit 20 bis 90 % ist; und
(B1) wenn eine Zunahme der Wasserabsorption der wasserabsorbierenden Folie mit zunehmender relativer Luftfeuchtigkeit von 70 % auf 95 % auf der Wasserdampfadsorptionsisotherme der wasserabsorbierenden Folie als AbH definiert ist, die Zunahme einer Wasserabsorption AbH mehr als 35 % der gesättigten Wasserabsorption Ws ist,
wobei die gesättigte Wasserabsorption, die Adsorptionsisotherme und die Wasserabsorption bei einer Temperatur von 10 °C gemessen werden.

2. Windschutzscheibe (1) nach Anspruch 1, wobei die wasserabweisende Gruppe eine kettenförmige Alkylgruppe, vorzugsweise eine lineare Alkylgruppe, ist und die Anzahl an Kohlenstoffatomen in der kettenförmigen Alkylgruppe vorzugsweise 1 bis 8 oder 4 bis 16 und vorzugsweise 4 bis 8 ist und die kettenförmige Alkylgruppe vorzugsweise eine n-Hexylgruppe ist.

3. Windschutzscheibe (1) nach Anspruch 1 oder 2, wobei die wasserabsorbierende Folie (81) mindestens die Bedingung A1 erfüllt.

4. Windschutzscheibe (1) nach Anspruch 3, wobei die wasserabsorbierende Folie (81) ferner die Bedingung A2 erfüllt, dass in dem orthogonalen Koordinatensystem eine Wasserdampfdesorptionsisotherme der wasserabsorbierenden Folie eine nach unten konvexe Kurve in einem Intervall ist, in dem die relative Feuchtigkeit 20 bis 90 % ist.

5. Windschutzscheibe (1) nach einem der Ansprüche 1 bis 4, wobei die wasserabsorbierende Folie (81) mindestens die Bedingung B1 erfüllt.

6. Windschutzscheibe (1) nach Anspruch 5, wobei die wasserabsorbierende Folie (81) ferner die Bedingung B2 erfüllt, dass, wenn eine Abnahme einer Wasserabsorption der wasserabsorbierenden Folie mit abnehmender relativer Feuchtigkeit von 95 % auf 70 % auf einer Wasserdampfdesorptionsisotherme der wasserabsorbierenden Folie als DeH definiert ist, die Abnahme der Wasserabsorption DeH mehr als 30 % der gesättigten Wasserabsorption Ws ist.

7. Windschutzscheibe (1) nach einem der Ansprüche 1 bis 6, wobei die wasserabsorbierende Folie (81) ferner die Bedingung C erfüllt, dass sich in dem orthogonalen Koordinatensystem eine Wasserabsorption DA₈₅ der wasserabsorbierenden Folie auf der Desorptionsisotherme bei einer relativen Feuchtigkeit von 75% oder mehr befindet, wobei die Wasserabsorption DA₈₅ einer Wasserabsorption A₈₅ der wasserabsorbierenden Folie bei einer relativen Feuchtigkeit von 85% auf der Adsorptionsisotherme entspricht.

8. Windschutzscheibe (1) nach einem der Ansprüche 1 bis 7, wobei ein Substrat (85) und eine Klebstoffschicht (82) zwischen der wasserabsorbierenden Folie (81) und der Oberfläche in Kontakt mit dem Lichtpfadraum (41) bereitgestellt sind, wobei das Substrat (85) eine erste Oberfläche aufweist, die die wasserabsorbierende Folie (81) trägt, und die Klebstoffschicht (82) in Kontakt mit einer zweiten Oberfläche des Substrats ist, wobei die zweite Oberfläche gegenüber der ersten Oberfläche ist.

9. Windschutzscheibe (1) nach einem der Ansprüche 1 bis 8, wobei die wasserabsorbierende Folie (81) zumindest auf der Oberfläche des Befestigungs- und/oder Lichtabschirmungselementes (61, 62) angeordnet ist, die mit dem Lichtpfadraum (41) in Kontakt ist.

10. Windschutzscheibe (1) nach einem der Ansprüche 1 bis 9, wobei die wasserabsorbierende Folie (81) zumindest auf der Oberfläche der Glasscheibe angeordnet ist, die mit dem Lichtpfadraum (41) in Kontakt ist.

11. Windschutzscheibe (1) nach Anspruch 10, wobei die wasserabsorbierende Folie (81) direkt auf der Oberfläche der Glasscheibe (5) gebildet ist, die in Kontakt mit dem Lichtpfadraum (41) ist.

12. Windschutzscheibe (1) nach einem der Ansprüche 1 bis 11, wobei ein Wasserkontaktwinkel, gemessen durch Aufbringen eines 4-mg-Wassertropfens auf eine Oberfläche der wasserabsorbierenden Folie (81), 70 Grad oder mehr ist.

13. Glasprodukt für eine Windschutzscheibe (1), das Glasprodukt umfassend eine Glasscheibe (5) und eine wasserabsorbierende Folie (81), die auf einer Oberfläche der Glasscheibe angeordnet ist, wobei
die wasserabsorbierende Folie (81)
-- eine siliciumoxidhaltige Metalloxidkomponente und ein wasserabsorbierendes Harz enthält,
-- mit einer wasserabweisenden Gruppe versehen ist, die abgeleitet ist von einer wasserabweisenden Gruppe, die eine hydrolysierbare Siliciumverbindung der Formel RₘSiY₄₋ₘ enthält, in der Y eine hydrolysierbare funktionelle Gruppe ist, m eine ganze Zahl von 1 bis 3 ist und R eine kettenförmige oder zyklische Alkylgruppe ist, die 3 bis 30 Kohlenstoffatome aufweist, oder R eine kettenförmige oder zyklische Alkylgruppe ist, die 1 bis 30 Kohlenstoffatome aufweist und in der mindestens ein Wasserstoffatom durch ein Fluoratom substituiert ist, und
-- eine gesättigte Wasserabsorption Ws pro Folienflächeneinheit von 1 g/m² oder mehr aufweist, und
- mindestens eine Bedingung, ausgewählt aus den folgenden Bedingungen A1 und B1, erfüllt ist:
(A1) in einem orthogonalen Koordinatensystem, das eine Abszisse, die die relative Luftfeuchtigkeit darstellt, und eine Ordinate, die die Menge an adsorbiertem Wasserdampf darstellt, aufweist, und in dem der Wert der gesättigten Wasserabsorption sich oberhalb eines Ursprungs auf der Ordinate befindet, eine Wasserdampfadsorptionsisotherme der wasserabsorbierenden Folie eine nach unten konvexe Kurve in einem Intervall ist, in dem die relative Luftfeuchtigkeit 20 bis 90 % ist; und
(B1) wenn eine Zunahme der Wasserabsorption der wasserabsorbierenden Folie mit zunehmender relativer Luftfeuchtigkeit von 70 % auf 95 % auf der Wasserdampfadsorptionsisotherme des wasserabsorbierenden Films als AbH definiert ist, die Zunahme einer Wasserabsorption AbH mehr als 35 % der gesättigten Wasserabsorption Ws ist,
wobei die gesättigte Wasserabsorption, die Adsorptionsisotherme und die Wasserabsorption bei einer Temperatur von 10 °C gemessen werden.

14. Glasprodukt für eine Windschutzscheibe (1) nach Anspruch 13, wobei die wasserabweisende Gruppe eine kettenförmige Alkylgruppe, vorzugsweise eine lineare Alkylgruppe, ist, und
die Anzahl der Kohlenstoffatome in der kettenförmigen Alkylgruppe vorzugsweise 1 bis 8 oder 4 bis 16, vorzugsweise 4 bis 8, ist und die kettenförmige Alkylgruppe vorzugsweise eine n-Hexylgruppe ist.

15. Antibeschlagelement (8), umfassend ein Substrat, eine wasserabsorbierende Folie (81), die auf einer ersten Oberfläche des Substrats (85) getragen wird, und eine Klebstoffschicht (82), die auf einer zweiten Oberfläche des Substrats gebildet ist, wobei die zweite Oberfläche gegenüber der ersten Oberfläche ist, wobei
- die wasserabsorbierende Folie (81)
-- eine siliciumoxidhaltige Metalloxidkomponente und ein wasserabsorbierendes Harz enthält,
-- mit einer wasserabweisenden Gruppe versehen ist, die abgeleitet ist von einer wasserabweisenden Gruppe, die eine hydrolysierbare Siliciumverbindung der Formel RₘSiY₄₋ₘ enthält, in der Y eine hydrolysierbare funktionelle Gruppe ist, m eine ganze Zahl von 1 bis 3 ist und R eine kettenförmige oder zyklische Alkylgruppe ist, die 3 bis 30 Kohlenstoffatome aufweist, oder R eine kettenförmige oder zyklische Alkylgruppe ist, die 1 bis 30 Kohlenstoffatome aufweist und in der mindestens ein Wasserstoffatom durch ein Fluoratom substituiert ist, und
-- eine gesättigte Wasserabsorption Ws pro Folienflächeneinheit von 1 g/m² oder mehr aufweist, und
- mindestens eine Bedingung, ausgewählt aus den folgenden Bedingungen A1 und B1, erfüllt ist:
(A1) in einem orthogonalen Koordinatensystem, das eine Abszisse, die die relative Luftfeuchtigkeit darstellt, und eine Ordinate, die die Menge an adsorbiertem Wasserdampf darstellt, aufweist, und in dem der Wert der gesättigten Wasserabsorption sich oberhalb eines Ursprungs auf der Ordinate befindet, eine Wasserdampfadsorptionsisotherme der wasserabsorbierenden Folie eine nach unten konvexe Kurve in einem Intervall ist, in dem die relative Luftfeuchtigkeit 20 bis 90 % ist; und
(B1) wenn eine Zunahme der Wasserabsorption der wasserabsorbierenden Folie mit zunehmender relativer Luftfeuchtigkeit von 70 % auf 95 % auf der Wasserdampfadsorptionsisotherme des wasserabsorbierenden Films als AbH definiert ist, die Zunahme einer Wasserabsorption AbH mehr als 35 % der gesättigten Wasserabsorption Ws ist,
wobei die gesättigte Wasserabsorption, die Adsorptionsisotherme und die Wasserabsorption bei einer Temperatur von 10 °C gemessen werden.

16. Antibeschlagelement (8) nach Anspruch 15, wobei die wasserabweisende Gruppe eine Kettenalkylgruppe, vorzugsweise eine lineare Alkylgruppe, ist und die Anzahl an Kohlenstoffatomen in der Kettenalkylgruppe vorzugsweise 1 bis 8 oder 4 bis 16 und vorzugsweise 4 bis 8 ist und die Kettenalkylgruppe vorzugsweise eine n-Hexylgruppe ist.

## Revendications

1. Pare-brise (1) approprié pour l'installation d'un dispositif d'acquisition d'informations (2) qui reçoit la lumière pénétrant à l'intérieur d'un véhicule (40) afin d'acquérir des informations sur l'environnement du véhicule,
le pare-brise (1) comprenant :
une plaque de verre (5) ; et
un élément de fixation et/ou de protection contre la lumière (61, 62) assurant au moins une fonction choisie parmi la fixation du dispositif d'acquisition d'informations (2) à la plaque de verre (5) et la protection contre la lumière entre un espace de trajet de lumière (41) comprenant un trajet de lumière (22) emprunté par la lumière se propageant à l'intérieur du véhicule et un espace habitable de l'intérieur du véhicule, dans lequel
- un film absorbant l'eau (81)
-- est disposé sur une surface en contact avec l'espace de trajet de lumière (41), la surface étant au moins choisie parmi une surface de la plaque de verre (5) et une surface de l'élément de fixation et/ou de protection contre la lumière (61, 62),
-- contient un composant oxyde de métal contenant de l'oxyde de silicone, et une résine absorbant l'eau,
-- est fourni avec un groupe hydrofuge dérivé un composé de silicium hydrolysable contenant un groupe hydrofuge de formule RₘSiY₄₋ₘ, dans laquelle Y est un groupe fonctionnel hydrolysable, m est un entier de 1 à 3, et R est un groupe alkyle à chaîne ou cyclique ayant de 3 à 30 atomes de carbone, ou R est un groupe alkyle à chaîne ou cyclique qui a de 1 à 30 atomes de carbone et dans lequel au moins un atome d'hydrogène est substitué par un atome de fluor, et
-- a une absorption d'eau saturée Ws par surface unitaire de film supérieure ou égale à 1 g/m², et
- au moins une condition parmi les conditions A1 et B1 suivantes est satisfaite :
(A1) dans un système de coordonnées orthogonales ayant une abscisse représentant l'humidité relative et une ordonnée représentant la quantité de vapeur d'eau adsorbée et dans lequel la valeur de l'absorption d'eau saturée se situe au-dessus d'une origine sur l'ordonnée, une isotherme d'adsorption de vapeur d'eau du film absorbant l'eau est une courbe convexe descendante dans un intervalle où l'humidité relative est de 20 à 90 % ; et
(B1) lorsqu'une augmentation de l'absorption d'eau du film absorbant l'eau avec une augmentation de l'humidité relative de 70 % à 95 % sur l'isotherme d'adsorption de vapeur d'eau du film absorbant l'eau est définie par AbH, l'augmentation de l'absorption d'eau AbH est supérieure à 35 % de l'absorption d'eau saturée Ws,
dans lequel l'absorption d'eau saturée, l'isotherme d'adsorption et l'absorption d'eau sont mesurées à une température de 10 °C.

2. Pare-brise (1) selon la revendication 1, dans lequel le groupe hydrofuge est un groupe alkyle à chaîne, de préférence un groupe alkyle linéaire, et le nombre d'atomes de carbone dans le groupe alkyle à chaîne est de préférence de 1 à 8 ou de 4 à 16, et de préférence de 4 à 8, et le groupe alkyle à chaîne est de préférence un groupe n-hexyle.

3. Pare-brise (1) selon la revendication 1 ou 2, dans lequel le film absorbant l'eau (81) satisfait au moins à la condition A1.

4. Pare-brise (1) selon la revendication 3, dans lequel le film absorbant l'eau (81) satisfait en outre à la condition A2 selon laquelle dans le système de coordonnées orthogonales, une isotherme de désorption de vapeur d'eau du film absorbant l'eau est une courbe convexe descendante dans un intervalle où l'humidité relative est de 20 à 90 %.

5. Pare-brise (1) selon l'une quelconque des revendications 1 à 4, dans lequel le film absorbant l'eau (81) satisfait au moins à la condition B1.

6. Pare-brise (1) selon la revendication 5, dans lequel le film absorbant l'eau (81) satisfait en outre à la condition B2 selon laquelle lorsqu'une diminution de l'absorption d'eau du film absorbant l'eau avec une humidité relative décroissante de 95 % à 70 % sur une isotherme de désorption de vapeur d'eau du film absorbant l'eau est définie par DeH, la diminution de l'absorption d'eau DeH est supérieure à 30 % de l'absorption d'eau saturée Ws.

7. Pare-brise (1) selon l'une quelconque des revendications 1 à 6, dans lequel le film absorbant l'eau (81) satisfait en outre à la condition C selon laquelle dans le système de coordonnées orthogonales, une absorption d'eau DA₈₅ du film absorbant l'eau sur l'isotherme de désorption est située à une humidité relative supérieure ou égale à 75 %, l'absorption d'eau DA₈₅ correspondant à une absorption d'eau A₈₅ du film absorbant l'eau à une humidité relative de 85 % sur l'isotherme d'adsorption.

8. Pare-brise (1) selon l'une quelconque des revendications 1 à 7, dans lequel un substrat (85) et une couche adhésive (82) sont fournis entre le film absorbant l'eau (81) et la surface en contact avec l'espace de trajet de lumière (41), le substrat (85) ayant une première surface supportant le film absorbant l'eau (81), la couche adhésive (82) étant en contact avec une deuxième surface du substrat, la deuxième surface étant opposée à la première surface.

9. Pare-brise (1) selon l'une quelconque des revendications 1 à 8, dans lequel le film absorbant l'eau (81) est disposé au moins sur la surface de l'élément de fixation et/ou de protection contre la lumière (61, 62) qui est en contact avec l'espace de trajet de lumière (41).

10. Pare-brise (1) selon l'une quelconque des revendications 1 à 9, dans lequel le film absorbant l'eau (81) est disposé au moins sur la surface de la plaque de verre qui est en contact avec l'espace de trajet de lumière (41).

11. Pare-brise (1) selon la revendication 10, dans lequel le film absorbant l'eau (81) est formé directement sur la surface de la plaque de verre (5) qui est en contact avec l'espace de trajet de lumière (41).

12. Pare-brise (1) selon l'une quelconque des revendications 1 à 11, dans lequel un angle de contact avec l'eau, tel que mesuré par l'application d'une gouttelette d'eau de 4 mg sur une surface du film absorbant l'eau (81) est supérieur ou égal à 70 degrés.

13. Produit en verre pour un pare-brise (1), le produit en verre comprenant une plaque de verre (5) et un film absorbant l'eau (81) disposé sur une surface de la plaque de verre, dans lequel
- le film absorbant l'eau (81)
-- contient un composant oxyde de métal contenant de l'oxyde de silicone, et une résine absorbant l'eau,
-- est fourni avec un groupe hydrofuge dérivé un composé de silicium hydrolysable contenant un groupe hydrofuge de formule RₘSiY₄₋ₘ, dans laquelle Y est un groupe fonctionnel hydrolysable, m est un entier de 1 à 3, et R est un groupe alkyle à chaîne ou cyclique ayant de 3 à 30 atomes de carbone, ou R est un groupe alkyle à chaîne ou cyclique qui a de 1 à 30 atomes de carbone et dans lequel au moins un atome d'hydrogène est substitué par un atome de fluor, et
-- a une absorption d'eau saturée Ws par surface unitaire de film supérieure ou égale à 1 g/m², et
- au moins une condition parmi les conditions A1 et B1 suivantes est satisfaite :
(A1) dans un système de coordonnées orthogonales ayant une abscisse représentant l'humidité relative et une ordonnée représentant la quantité de vapeur d'eau adsorbée et dans lequel la valeur de l'absorption d'eau saturée se situe au-dessus d'une origine sur l'ordonnée, une isotherme d'adsorption de vapeur d'eau du film absorbant l'eau est une courbe convexe descendante dans un intervalle où l'humidité relative est de 20 à 90 % ; et
(B1) lorsqu'une augmentation de l'absorption d'eau du film absorbant l'eau avec une augmentation de l'humidité relative de 70 % à 95 % sur l'isotherme d'adsorption de vapeur d'eau du film absorbant l'eau est définie par AbH, l'augmentation de l'absorption d'eau AbH est supérieure à 35 % de l'absorption d'eau saturée Ws,
dans lequel l'absorption d'eau saturée, l'isotherme d'adsorption et l'absorption d'eau sont mesurées à une température de 10 °C.

14. Produit en verre pour pare-brise (1) selon la revendication 13, dans lequel le groupe hydrofuge est un groupe alkyle à chaîne, de préférence un groupe alkyle linéaire, et le nombre d'atomes de carbone dans le groupe alkyle à chaîne est de préférence de 1 à 8 ou de 4 à 16, et de préférence de 4 à 8, et le groupe alkyle à chaîne est de préférence un groupe n-hexyle.

15. Élément antibuée (8) comprenant un substrat, un film absorbant l'eau (81) supporté sur une première surface du substrat (85), et une couche adhésive (82) formée sur une deuxième surface du substrat, la deuxième surface étant opposée à la première surface, dans lequel
- le film absorbant l'eau (81)
-- contient un composant oxyde de métal contenant de l'oxyde de silicone et une résine absorbant l'eau,
-- est fourni avec un groupe hydrofuge dérivé un composé de silicium hydrolysable contenant un groupe hydrofuge de formule RₘSiY₄₋ₘ, dans laquelle Y est un groupe fonctionnel hydrolysable, m est un entier de 1 à 3, et R est un groupe alkyle à chaîne ou cyclique ayant de 3 à 30 atomes de carbone, ou R est un groupe alkyle à chaîne ou cyclique qui a de 1 à 30 atomes de carbone et dans lequel au moins un atome d'hydrogène est substitué par un atome de fluor, et
-- a une absorption d'eau saturée Ws par surface unitaire de film supérieure ou égale à 1 g/m², et
- au moins une condition parmi les conditions A1 et B1 suivantes est satisfaite :
(A1) dans un système de coordonnées orthogonales ayant une abscisse représentant l'humidité relative et une ordonnée représentant la quantité de vapeur d'eau adsorbée et dans lequel la valeur de l'absorption d'eau saturée se situe au-dessus d'une origine sur l'ordonnée, une isotherme d'adsorption de vapeur d'eau du film absorbant l'eau est une courbe convexe descendante dans un intervalle où l'humidité relative est de 20 à 90 % ; et
(B1) lorsqu'une augmentation de l'absorption d'eau du film absorbant l'eau avec une augmentation de l'humidité relative de 70 % à 95 % sur l'isotherme d'adsorption de vapeur d'eau du film absorbant l'eau est définie par AbH, l'augmentation de l'absorption d'eau AbH est supérieure à 35 % de l'absorption d'eau saturée Ws,
dans lequel l'absorption d'eau saturée, l'isotherme d'adsorption et l'absorption d'eau sont mesurées à une température de 10 °C.

16. Élément antibuée (8) selon la revendication 15, dans lequel le groupe hydrofuge est un groupe alkyle à chaîne, de préférence un groupe alkyle linéaire, et le nombre d'atomes de carbone dans le groupe alkyle à chaîne est de préférence de 1 à 8 ou de 4 à 16, et de préférence de 4 à 8, et le groupe alkyle à chaîne est de préférence un groupe n-hexyle.
